# EUROPÄISCHE PATENTANMELDUNG

(11) **EP 4 721 931 A1**
(43) Veröffentlichungstag der Anmeldung: **08.04.2026**
(21) Anmeldenummer: 24204276.0
(22) Anmeldetag: 02.10.2024
(51) Int. Cl.: B25J 9/16

(54) **SETZANLAGE UND VERFAHREN**

(71) Anmelder: AutomationsRobotic GmbH, 84323 Massing (DE)
(72) Erfinder: Steiger, Alexander, 84028 Landshut (DE)
(74) Vertreter: Pescher, Manuel Dirk

(57) **Zusammenfassung**

Die Erfindung betrifft eine Setzanlage (200) für ein Setzen (101) von setzbarem Schüttgut (19), insbesondere Leisten, weiter insbesondere Holzleisten, aufweisend:
- mindestens einen Setzroboter (270),
- mindestens eine Sensorvorrichtung (250),
- mindestens eine Steuereinrichtung (300), und
- mindestens eine erste Fördervorrichtung (210),
dadurch gekennzeichnet, dass die mindestens erste Fördervorrichtung (210) mindestens einem Aufbaubereich (260) für einen Aufbau einer Packeinheit (500) des Schüttguts (19) zugeordnet ist, um mittels des mindestens einen Setzroboters (270), mindestens ein einzelnes Teil des Schüttguts (19) von der ersten Fördervorrichtung (210) in den Aufbaubereich (260) zu übertragen und in dem Aufbaubereich (260) abzusetzen, insbesondere um das einzelne Teil des Schüttguts (19) auf eine Pre-Packeinheit (505) zu setzen, um eine Packeinheit (500) des Schüttguts (19) aufzubauen.

## Beschreibung

Die Erfindung betrifft eine Setzanlage für ein Setzen von setzbarem Schüttgut. Die Erfindung betrifft eine Steuereinrichtung zum Steuern einer Setzanlage für ein Setzen von setzbarem Schüttgut. Die Erfindung betrifft ein Computerprogrammprodukt. Die Erfindung betrifft ein Verfahren zum Setzen, und insbesondere Orientieren, von setzbarem, insbesondere orientierbarem, Schüttgut.

In der DE2940816A1 wird beschrieben Vorstufen von Verbundsteinen durch eine Setzvorrichtung auf ein Förderband zu setzen, um die Vorstufen zu einem Verbundstein verbinden zu können. Dabei weist die Setzvorrichtung Einschränkungen in Bezug auf die Komplexität des durch sie durchführbaren Setzvorgangs auf.

In der DE102018108634A1 wird eine Fertigungsanlage für Betonschwellen und ein zugehöriges Betriebsverfahren beschrieben, bei dem mittels einer Positioniereinrichtung magnetische Einbauteile auf definierte Positionen an Formböden der Betonschwellen angeordnet werden können. Diesbezüglich fehlt es der Fertigungsanlage an Flexibilität in Bezug auf die Durchführung des Positionierens und in Bezug auf die positionierbaren Teile.

Daher ist es Aufgabe der vorliegenden Erfindung komplexe Setzvorgänge zu ermöglichen und dadurch eine Flexibilität zu erhöhen.

Die Aufgabe wird insbesondere durch eine Setzanlage mit den Merkmalen des Anspruchs 1 gelöst. Die Aufgabe wird insbesondere durch ein Verfahren mit den Merkmalen des Anspruchs 13 gelöst. Die Aufgabe wird insbesondere durch eine Steuereinrichtung mit den Merkmalen des Anspruchs 14 gelöst. Die Aufgabe wird insbesondere durch ein Computerprogrammprodukt mit den Merkmalen des Anspruch 15 gelöst. Weiterbildungen, weitere Details sowie weitere Ausführungsformen ergeben sich durch die Beschreibung, die Figuren wie auch durch die abhängigen Ansprüche. Dabei kann die Setzanlage durch die Merkmale des Verfahrens wie auch der Steuereinrichtung wie auch des Computerprogrammprodukts beschrieben werden. Dies gilt über die Kategoriegrenzen Verfahren, Verwendung, Vorrichtung und System hinweg, insbesondere auch wechselseitig, weshalb auf die verschiedenen Aspekte wechselseitig Bezug genommen werden kann, beziehungsweise wird. Damit kann auch jedes von dem Computerprogrammprodukt, dem Verfahren, der Steuereinrichtung und der Setzanlage durch die Merkmale, Details, Vorteile und Effekte des jeweils anderen beschrieben werden. Aus Gründen der Leserlichkeit und Kompaktheit wird dies entsprechend im Folgenden vorausgesetzt, wenn nicht explizit anders beschrieben. Fortbildungen und Ausführungsformen werden durch die abhängigen Ansprüche beschrieben.

Die Aufgabe wird nach einem Aspekt durch eine Setzanlage mit den Merkmalen des Anspruchs 1 gelöst.

Dabei kann eine Setzanlage für ein Setzen von setzbarem Schüttgut mindestens einen Setzroboter aufweisen. Die Setzanlage kann mindestens eine Sensorvorrichtung aufweisen. Die Setzanlage kann mindestens eine Steuereinrichtung aufweisen. Die Setzanlage kann mindestens eine erste Fördervorrichtung aufweisen.

Die mindestens erste Fördervorrichtung ist insbesondere mindestens einem Aufbaubereich für einen Aufbau einer Packeinheit des Schüttguts zugeordnet, um mittels des mindestens einen Setzroboters, mindestens ein einzelnes Teil des Schüttguts von der ersten Fördervorrichtung in den Aufbaubereich zu übertragen und in dem Aufbaubereich abzusetzen, insbesondere um das einzelne Teil auf eine Prepackeinheit zu setzen, um eine Packeinheit des Schüttguts aufbauen zu können. Der Aufbaubereich kann eine Position aufweisen, auf der mindestens ein Teil des Schüttguts angeordnet werden kann. Dabei kann das Schüttgut unmittelbar auf einer Aufbaugrundfläche angeordnet werden, wenn insbesondere noch keine Prepackeinheit aufgebaut worden ist. Im Laufe des Verfahrens, bei Aufbau der Packeinheit ist die Position insbesondere auf anderen Teilen des Schüttguts in einer Prepackeinheit angeordnet, um dadurch die Packeinheit ausbilden zu können. Die Steuereinrichtung ist insbesondere derart ausgebildet und eingerichtet, um einen möglichst effizienten Weg anhand der von der Sensoreinrichtung erfassten Teile für einen Übertrag und ein Absetzen zu ermitteln und den Setzroboter entsprechend steuern zu können.

Die Sensorvorrichtung ist insbesondere ausgebildet und eingerichtet, um Schüttgut, das auf der ersten Fördervorrichtung gefördert wird, zu erfassen und eine Information an die Steuereinrichtung zu übermitteln.

Die Steuereinrichtung ist insbesondere ausgebildet und eingerichtet, um basierend auf der Information von der Sensorvorrichtung eine Vorhersage zu ermitteln und darauf aufbauend den Setzroboter anzusteuern, um festzulegen, welches einzelne Teil des Schüttguts wann zu nehmen und wo im Aufbaubereich, insbesondere auf der Prepackeinheit, abzusetzen ist, um im Aufbaubereich die Packeinheit aufzubauen.

Ein Schüttgut ist in diesem Zusammenhang insbesondere ein setzbares Schüttgut, wenn ein Teil des Schüttguts auf andere Teile desselben Schüttguts gesetzt werden kann. Dabei zeichnet sich das Schüttgut insbesondere durch ausreichende Anlageflächen aus, mit denen es in Kontakt mit anderen Teilen des Schüttgutes kommen kann, um eine Packeinheit ausbilden zu können. Beispiele für setzbares Schüttgut sind in diesem Zusammenhang insbesondere Sechsseitwürfel, Oktaeder, Dodekaeder oder andere beliebig vielseitige "Würfel-Strukturen" (ab 4 Seiten), Planken, insbesondere Holzplanken, Platten, insbesondere Holzplatten, Latten, insbesondere Holzlatten, Leisten, insbesondere Holzleisten oder Ähnliches. Dabei können die Seiten auch unterschiedlich groß von Ihrem Flächeninhalt und/oder von ihrer Seitenlänge sein. Auch können nicht rechteckige Geometrien vorgesehen sein.

Ein Schüttgut ist in diesem Zusammenhang insbesondere ein orientierbares Schüttgut, wenn es mindestens zwei Seiten hat, die sich in einer von außen definiert anderen Ausgestaltung unterscheiden. Bei dieser Ausgestaltung kann es sich um eine Geometrie, um eine Farbe oder um eine andere Oberflächeneigenschaft handeln. Beispiele für orientierbare Schüttgüter sind etwa Platten, insbesondere Holzplatten, wenn sie nicht (punkt- und/oder achsen-)symmetrisch sind, Planken, wenn sie nicht (punkt- und/oder achsen-)symmetrisch sind, Würfel, wenn sie nicht (punkt- und/oder achsen-)symmetrisch sind, beispielsweise durch die Anordnung von Farben oder von Zahlen oder Ähnliches. Dies gilt entsprechend für höhergeometrische Würfel. Dies gilt entsprechend auch für andere beliebig vielseitige "Würfel-Strukturen" (ab 4 Seiten), auch wenn nicht alle Seiten gleich lang sind und/oder wenn nicht alle Seiten den gleichen Flächeninhalt aufweisen.

Ein nichtsetzbares Schüttgut ist in diesem Zusammenhang insbesondere ein solches, bei welchem Teile des Schüttgutes nicht strukturiert auf andere Teile des Schüttgutes abgesetzt werden können, um eine Packeinheit aufzubauen. Dies kann einerseits der Tatsache geschuldet sein, dass es nicht gegriffen werden kann und/oder andererseits der Tatsache geschuldet sein, dass es nicht durch die Struktur entsprechend aneinandergelagert werden kann, um eine Packeinheit zu bilden. Als nichtsetzbares Schüttgut ist insbesondere ein granulares Schüttgut zu verstehen, wie etwa Sand, Erde, Lehm, Pulver - etwa Mehlpulver, Zuckerpulver -, oder Samen - wie etwa Reis, Getreide, Weizen, etc. -, um nur einige Beispiele zu nennen.

In einer Ausführungsform kann insbesondere vorgesehen sein, dass Leisten als Holzleisten aus einem Vorprozess angeliefert werden können, um auf die erste Fördervorrichtung übertragen, insbesondere geschüttet zu werden. Im Vorprozess können Sägen - etwa bis zu 4 Sägen - einer als einem Leitsystem ausgebildeten Steuereinrichtung untergeordnet sein, wobei das Leitsystem auch der Setzanlage übergeordnet sein kann. Damit kann die Steuereinrichtung als Leitsystem sowohl das an anderer Stelle hierin beschriebene Verfahren als auch das diesem vorgelagerte Verfahren (der Vorprozess) steuern und miteinander koordinieren.

Im Vorprozess kann ein Baumstamm gescannt werden, um etwa Einschlüsse oder Astansätze zu erkennen, um dadurch einen Verschnitt des Baumstamms zu optimieren. Das Scannen kann etwa über ein Röntgen erfolgen. Der Baumstamm kann durch die Sägen, gesteuert vom Leitsystem, geschnitten werden, wobei durch die optionale Optimierung des Verschnitts möglichst wenig Holzabfall entstehen kann, wobei aber eine zunächst willkürliche Zusammensetzung der entstehenden Holzleisten anfallen kann.

Die Information über daraus angelieferte Leistenarten werden entsprechend an das Leitsystem übermittelt. Die Sensorvorrichtung kann dann als Information den tatsächlichen Zeitpunkt übermitteln, wann welche Art von Leisten durch sie auf der ersten Fördervorrichtung passieren.

Eine Information über die zu erwartenden Leisten kann durch das Leitsystem aus der Sägevorrichtung übermittelt werden. Diese Information muss nicht zwingend da sein, sondern ist optional. Auch alleine die Sensorvorrichtung und die durch sie bereitgestellte Information kann ausreichen, um über die Steuereinrichtung eine Vorhersage zu ermitteln, wann welche Leiste wo auf der ersten Fördervorrichtung angekommen ist, um durch einen für diese durch die Steuereinrichtung vorgesehenen Setzroboter aufgenommen zu werden.

Die erste Fördervorrichtung kann dabei getrackt werden, um dieser eine aboslute Position zuweisen zu können, um auch dadurch zu ermöglichen vorherzusagen, durch die Steuereinrichtung, wann welches Teil der Leisten relativ zu welchem Setzroboter angeordnet ist, um einen vorgesehenen Setzroboter durch die Steuereinrichtung ansteuern zu können, um das entsprechende Teil zu greifen.

Die erste Fördervorrichtung kann einen Encoder aufweisen, der etwa ein Rad aufweist, um über eine Anzahl von Positionspunkten - beispielsweise zwischen 3000 und 5000, weiter insbesondere zwischen 3500 und 4500 Positionspunkte, weiter insbesondere genau 4000 Positionspunkte - des Rades die Position der ersten Fördervorrichtung bestimmen zu können.

Die Sensorvorrichtung kann ein 3D-Scanner mit Conveyor Tracking sein, der eine 3D-Punktwolke erzeugen kann, deren zugrundeliegende Form und Dimensionierung geschätzt wird, um einen Rückschluss auf die Art der Leiste zu ermitteln, die verbaut werden kann. Dabei kann auch ein Schwerpunkt ermittelt werden, wobei die Steuereinrichtung diesen Schwerpunkt als einen Ansatzpunkt für ein Aufnehmen der Leiste durch den vorgesehenen Setzroboter bestimmen kann. Dabei kann der Setzroboter über eine Greif- oder Saugvorrichtung verfügen, um das entsprechende Aufnehmen zu ermöglichen.

Die hier für das spezielle Ausführungsbeispiel beschriebenen Komponenten und Vorrichtungen können auch mit anderen Ausführungsbeispielen kombiniert werden, um dadurch auch allgemeinere Fälle von Schüttgut, also insbesondere nicht lediglich Leisten, insbesondere Holzleisten, entsprechend aufbauen zu können zu Packeinheiten in Aufbaubereichen.

Nach einem Aspekt kann mindestens eine zweite Fördervorrichtung den Aufbaubereich für den Aufbau der Packeinheit aufweisen. Die zweite Fördervorrichtung kann der mindestens ersten Fördervorrichtung derart zugeordnet sein, um von der ersten, das Schüttgut fördernden Fördervorrichtung in den Aufbaubereich auf der zweiten Fördervorrichtung, mittels des Setzroboters, mindestens ein einzelnes Teil des Schüttguts zu übertragen, um eine Packeinheit aufzubauen, insbesondere um es auf eine Prepackeinheit zu setzen. Durch die zweite Fördervorrichtung kann ein automatisiertes Entnehmen der Packeinheit nach Fertigstellung deren Aufbaus aus der Setzanlage erfolgen.

Die mindestens eine, eine Packeinheit und/oder mindestens eine Prepackeinheit des Schüttguts fördernde zweite Fördervorrichtung kann dabei insbesondere derart ausgebildet sein, dass sie eine Hebevorrichtung aufweist, die insbesondere abhängig von einem fortschreitenden Aufbau der Prepackeinheit einen Absenkschritt durchführen kann, um dadurch zu ermöglichen, dass der Setzroboter insbesondere keine Höhenänderung der Pre-Packeinheit kompensieren muss, also insbesondere nicht tiefer operieren muss, als in einer definierten Operationsebene. Alternativ oder zusätzlich muss der Setzroboter eben auch nicht in einer höheren Ebene operieren, sondern kann auf einer definierten Höhenebene operieren. Dadurch kann die Operation an sich und das Aufnehmen, Absetzen und Übertragen des Teils beschleunigt werden. Dadurch kann entsprechend auch ein Aufbau einer Packeinheit beschleunigt werden.

In Ausführungsformen kann also vorgesehen sein, dass sich die erste Fördervorrichtung und die zweite Fördervorrichtung in unterschiedlichen Höhenebenen befinden. Dabei kann insbesondere vorgesehen sein, dass die zweite Fördervorrichtung entsprechend niedriger angeordnet ist, als die erste Fördervorrichtung, wobei eine optional vorgesehene Hebevorrichtung, wie sie an anderer Stelle hierin beschrieben ist, zu Beginn des Verfahrens, wie es an anderer Stelle hierin beschrieben ist, auf gleicher Höhenebene angeordnet sein kann, wie die erste Fördervorrichtung, wobei mit fortschreitendem Aufbau der Packeinheit entsprechend eine Absenkung erfolgen kann, insbesondere auf den Höhenlevel einer Horizontalfördervorrichtung der zweiten Fördervorrichtung, insbesondere in Form eines Förderbandes, eines Rollenförderers, eines Kettenförderers oder Ähnlichem.

Hier und an anderer Stelle hierin kann jede Horizontalfördervorrichtung, insbesondere unabhängig davon, ob es sich um eine Horizontalfördervorrichtung der ersten Fördervorrichtung oder um eine der zweiten Fördervorrichtung oder um eine einer Hebevorrichtung, wie die der zweiten Fördervorrichtung, handelt, als Förderband, Rollenförderer oder Kettenförderer oder ähnliche Fördervorrichtung ausgebildet sein.

Es kann insbesondere vorgesehen sein, dass die Hebevorrichtung den Aufbaubereich aufweist und dass das Absenken derart funktioniert, dass bei Erreichen der Höhenebene der zweiten Horizontalfördervorrichtung (auch als Horizontaltransportvorrichtung zu bezeichnen) als zweiter Fördervorrichtung der Aufbau der Packeinheit abgeschlossen ist. Dadurch ist es möglich, dass direkt im Anschluss nach Abschluss des Aufbaus der Packeinheit, ein Abtransport der Packeinheit eingeleitet werden kann, in dem die Horizontalfördervorrichtung aktiviert werden kann, um dadurch eine Horizontalebenenbewegung der Packeinheit zu ermöglichen. Diese kann über einen Ausgang ebenfalls in Form einer Horizontaltransportvorrichtung aus der Setzanlage abgeführt werden. Dadurch kann der Aufbaubereich frei werden, für einen weiteren Aufbau einer Packeinheit, weshalb die Hebevorrichtung in die ursprüngliche Höhe, insbesondere in Höhe der ersten Fördervorrichtung, zurückkehren kann. Damit ist es möglich, dass das Verfahren wiederholt durchgeführt werden kann.

Nach einem Aspekt kann die erste Fördervorrichtung eine geschlossene Bahn aufweisen. Diese kann ausgebildet und angeordnet sein, um darauf das setzbare, insbesondere orientierbare, Schüttgut, insbesondere in einem Karussellverfahren, umlaufen zu lassen. Dadurch ist es möglich, entsprechende Redundanzen einzubauen, wodurch insbesondere Teile des Schüttguts wiederholt die mindestens eine Sensorvorrichtung und/oder den mindestens einen Setzroboter passieren können, um entsprechend bei fortschreitendem Aufbau der mindestens einen Packeinheit wiederholt Teile aus dem umlaufenden Schüttgut entnehmen zu können und auf die Prepackeinheit aufladen zu können, um dadurch den Aufbau nach Kriterien der Effizienz und des fortschreitenden Aufbaus durchführen und abschließen zu können. Insbesondere entfällt dadurch auch ein Schritt eines Zurückführens von bereits passiertem Schüttgut, was Ressourcen spart.

Das Umlaufen bezieht sich dabei insbesondere auf die Ausgestaltung der ersten Fördervorrichtung, die insbesondere als eine geschlossene Bahn ausgestaltet sein kann. Eine Bahn ist insbesondere dann geschlossen, wenn die auf ihr geförderten Teile in unendlichen Bahnen über die Fördervorrichtung laufen, ohne dabei an ein Ende zu gelangen oder von der Bahn zu fallen. Dabei kann insbesondere vorgesehen sein, dass eine Entnahme insbesondere durch den Setzroboter erfolgt und nicht etwa durch ein Abkippen oder Abschütten von der Bahn.

Als Karussellverfahren wird dabei insbesondere eine geschlossene Bahn bezeichnet, die um eine zentrale Mittellinie, beispielsweise als Ellipsenbahn, und/oder einen zentralen Mittelpunkt, insbesondere als Kreisbahn, herumführt. Dadurch kann eine optimale und besonders effiziente und kurze Bahn ausgebildet werden, die insbesondere angepasst werden kann an die Menge des zu erwartenden Schüttgutes, um dadurch eine möglichst effiziente Förderung sowie einen möglichst effizienten Aufbau der Packeinheit zu ermöglichen.

Nach einem Aspekt kann die Steuereinrichtung ausgebildet und eingerichtet sein, um die Position, auf der das einzelne Teil des Schüttguts im Aufbaubereich abzusetzen ist, anhand mindestens eines Parameters zu bestimmen. Dabei kann insbesondere vorgesehen sein, dass unterschiedlich ausgestaltete Teile, insbesondere unterschiedlich dimensionierte Teile, derart miteinander zusammengelegt werden können, um eine möglichst ideale - im Sinne von möglichst dichter - Packung zu erreichen. Dadurch kann auf engem Raum eine möglichst große Menge an Teilen des Schüttguts abtransportiert werden.

Nach einem Aspekt kann der Parameter insbesondere eines ausgewählt aus einer Art des Teils des Schüttguts, einer Dimensionierung des Teil des Schüttguts, einer Durchführungsgeschwindigkeit eines Setzvorgangs, einer Reichweite des Setzroboters, einer Bewegungsmenge des Setzroboters, einem Energieverbrauch bei der Durchführung des Setzvorgangs, einer Vorhersage der Packungsdichte oder einer Vorhersage des Packungsaufbaus basierend auf den bereits abgelegten und/oder noch auf der ersten Fördereinrichtung, insbesondere im Umlauf, befindlichen einzelnen Teilen des Schüttguts sein. Dadurch ist es möglich, einen besonders effizienten Aufbau der Packeinheit zu bewerkstelligen und entsprechend verschiedene Parameter zu berücksichtigen, die diesen Aufbau effizienter gestalten. Dabei kann eine beliebige Kombination der genannten und/oder auch anderer Parameter herangezogen werden.

Die Art des Teils des Schüttguts kann sich dabei auf eine Qualität oder eine Eigenschaft des Schüttguts beziehen. So kann etwa ein Schüttgut aus einem Material für eine (Pre-)Packeinheit vorgesehen sein, während ein anderes Material für eine andere (Pre-)Packeinheit vorgesehen sein kann. Dadurch kann auch eine Sortierung nach der Art erfolgen.

Eine Dimensionierung kann sich insbesondere auf die Höhe, Breite und/oder Länge eines Teils des Schüttguts beziehen. So können etwa (weitestgehend) identische Teile des Schüttguts für den Aufbau einer (Pre-)Packeinheit vorgesehen sein, während anders dimensionierte Teile für andere (Pre-)Packeinheiten vorgesehen sein können.

Es werden in einer Ausführungsform, wie auch an anderer Stelle hierin beschrieben, die einzelnen Teile nach ihrer Dimensionierung (Länge, Breite, Höhe) auf eine (Pre-)Packeinheit, insbesondere als Stapel zu bezeichnen, sortiert, wobei die Sortierung (weitestgehend) identischer Teile auf jeweils einen Stapel erfolgt. Es können mehrere (Pre-)Packeinheiten existieren, auf die jeweils eine Art von Teil sortiert werden kann. Dabei können die verschiedenen Teile auf verschiedene (Pre-)Packeinheiten sortiert werden, wobei bei Beginn des Aufbaus einem Aufbaubereich eine Art Teil entsprechend seiner Dimensionierung zugeordnet wird, um einen Aufbau mit dieser Art von Teil durchzuführen.

Es kann sogenannte Runner geben, das sind Aufbaubereiche, die jeweils identische, oft anfallende Teile aufweisen können. Andere Aufbaubereiche können noch einen Aufbau ermöglichen, mit einer bestimmten Art von Teil, die seltener auf der ersten Fördervorrichtung auftreten oder dort seltener erwartet werden.

Die Durchführungsgeschwindigkeit eines Setzvorgangs bezieht insbesondere die Geschwindigkeit und damit auch die Zeit ein, die der Setzroboter benötigt, um von einer gegebenen Position in eine Setzposition zu gelangen, um ein Übertragen (kann auch als ein Überführen bezeichnet werden) und Absetzen durchführen zu können.

Eine Reichweite des Setzroboters bezieht sich dabei insbesondere darauf, dass der Setzroboter zu einer gegebenen Zeit, insbesondere angesichts einer sich bewegenden Geschwindigkeit der Fördervorrichtung, gegebenenfalls bestimmte Teile nicht erreichen kann, weshalb entsprechend andere Teile ausgewählt werden, um den Setzvorgang möglichst wenig pausieren zu müssen.

Als Bewegungsmenge des Setzroboters wird dabei insbesondere eine Menge des Verfahrweges des Setzroboters und/oder seiner Komponenten verstanden. Als Energieverbrauch bei der Durchführung des Setzvorgangs wird insbesondere eine Menge an Energie, den die Setzanlage verbraucht, verstanden, insbesondere verursacht durch die Bewegung des Setzroboters. Diese kann daher, insbesondere unter Optimierung der Bewegungsmenge, reduziert werden.

Eine Vorhersage der Packungsdichte und/oder eine Vorhersage des Packungsaufbaus bezieht sich dabei insbesondere auf die interne Dichte und/oder die äußere Gestaltung der Packeinheit um einen möglichst effizienten Transport, insbesondere auch nach dem Verlassen der Setzanlage, ermöglichen zu können. Dabei kann insbesondere auch vorgesehen sein, dass die Steuereinrichtung vorab eine strukturelle äußere Gestaltung übernimmt und/oder Vorgaben an die Dichte in einer Speichereinrichtung aufweist, um entsprechend die Teile auswählen zu können, die es bedarf, um den Packeinheitsaufbau bewerkstelligen zu können, um die Parameter zu erfüllen. Dabei ist insbesondere der intrinsische Aufbau der Packeinheit (abgesehen von einer ggf. zu erreichenden Dichte) nicht vorherbestimmt, da dies anhand der von der Sensorvorrichtung (auch als Sensoreinheit bezeichenbar) erfassten Teile des Schüttguts durchgeführt wird, da entsprechend nicht vorhergesagt werden kann, welche Teile angeliefert werden. In diesem Zusammenhang bezieht sich die Vorhersage also auf eine vor dem Start und Laufen des Verfahrens gemachte Vorhersage. Dies ist zu unterscheiden von der Vorhersage, den die Steuereinrichtung trifft, um zu bestimmen, auf welcher Position ein Teil anzuordnen sein wird, nachdem es von der Sensorvorrichtung (auch als eine Sensoreinheit bezeichenbar) erfasst wurde und entsprechend dessen Struktur und Form bestimmt worden ist, und die Steuereinrichtung ermitteln konnte, wie das Teil am effizientesten in mindestens einer Packeinheit gestapelt werden kann.

In anderen Worten ausgedrückt bedeutet dies, dass die Sensorvorrichtung permanent die, wie an anderer Stelle beschrieben, umlaufenden Teile des Schüttguts erfassen kann, insbesondere auch in einem Überlapp und/oder in einer Berührsituation der Teile. Die Steuereinrichtung kann ausgebildet und eingerichtet sein, sowohl den Überlapp, als auch die Berührsituation zu erkennen und entsprechend die diese bildenden Teile zu identifizieren, um trotzdem in der Lage zu sein, die Teile und entsprechend ein Aufnehmen (wie ein Greifen) durch einen Setzroboter zu ermöglichen, um die Teile an einer Position auf der Prepackeinheit ablegen zu können, basierend auf der durch die Steuereinrichtung vorhergesagten Position. Dadurch wird auch insbesondere erkenntlich, warum eine Redundanz des umlaufenden Schüttguts vorteilhaft sein kann, da dadurch die Steuereinrichtung in der Lage ist einen Setzroboter anzuweisen in einem weiteren Umlauf ein, dann vielleicht besser passendes Teil aufzunehmen und wodurch dieses nicht nach der ersten Passage für den Aufbau erst einmal verloren ist, weil es dann die erste Fördervorrichtung wieder verlassen würde.

Die Sensorvorrichtung ermittelt, wie an anderer Stelle hierin beschrieben, ein 3D-Modell des auf der ersten Fördervorrichtung angelieferten Schüttguts und kann dabei beispielsweise über die von einer Steuereinrichtung, insbesondere als Leitsystem ausgebildet, Informationen verarbeiten, welche Art von Schüttgut, insbesondere welche Art von Leisten, insbesondere Holzleisten, angeliefert werden können. Dabei kann über eine Logik mittels Abgleichs des ermittelten 3D-Modells und den bereitgestellten Informationen eine Vorhersage getroffen werden, welche Teile in einer Berührsituation und/oder in einem Überlapp mit höchster Wahrscheinlichkeit vorliegen. Diese Vorhersage kann durch die Steuereinrichtung ebenfalls gemacht werden, um mindestens ein Teil aus einer Berührsituation und/oder aus einem Überlapp entnehmen zu können. Dadurch sind diese Teile insbesondere nicht für den weiteren Verlauf eines an anderer Stelle hierin beschriebenen Verfahrens verloren, sondern eine Vereinzelung der Teile kann stattfinden.

In Ausführungformen, in denen mehrere Packeinheiten vorgesehen sind, die aufgebaut werden sollen, kann entsprechend eine Vielzahl von Aufbaubereichen vorgesehen sein, wobei die Steuereinrichtung insbesondere in der Lage ist zu ermitteln, welches Teil auf welche Position in welchem Aufbaubereich und/oder auf welche Prepackeinheit geladen werden sollte.

Nach einem Aspekt können die Steuereinrichtung und der Setzroboter ausgebildet und eingerichtet sein, um ein setzbares und orientierbares Schüttgut beim Übertrag von der ersten Fördereinrichtung in den Aufbaubereich zu Orientieren.

Dabei kann sich ein Orientieren auf eine Bewegung in Form einer Rotation um mindestens eine der X-, Y- und/oder Z-Achsen beziehen. Dadurch ist es möglich, dass das Schüttgut beziehungsweise die Teile des Schüttguts nicht in entsprechend vororientierter Form angeliefert werden müssen, sondern vielmehr kann das Teil entsprechend in der zufällig auf die erste Fördervorrichtung geschütteten Lage aufgenommen und übertragen werden.

Nach einem Aspekt kann der mindestens eine Setzroboter einer ausgewählt aus einem Deltaroboter, einem Sechsachsroboter, einem SCARA-Roboter oder einer dreiachsig verfahrbaren Robotereinrichtung sein.

Als Deltaroboter sind insbesondere Parallelarmroboter mit Stabkinetik vorgesehen. Die Form der mindestens drei Arme dieses Industrieroboters, welche mit Universalgelenken mit der Basis verknüpft sein können, erinnert an den griechischen Buchstaben Delta. Deltaroboter sind insbesondere leicht und schnell, was hohe Durchsatzraten erlaubt und dabei eine schnelle Aufbaugeschwindigkeit von Packeinheiten ermöglicht. Ein Deltaroboter ist insbesondere eine spezielle Art von Setzroboter mit Armen, der sich durch seine hohe Beweglichkeit und Flexibilität auszeichnet. Er weist insbesondere drei bis sechs Gelenke auf, die in Form eines Deltas angeordnet sind. Dies ermöglicht dem Deltaroboter als Setzroboter eine große Bewegungsfreiheit im Raum und erleichtert es ihm, schwierige Aufgaben zu erfüllen, insbesondere in einer hohen Geschwindigkeit.

Sechsachsroboter sind sechsachsig verfahrbare Roboter, die über mehrere Gelenke Rotationen und Linearverschiebungen durchführen können. Dadurch können Sie Aufnahmevorgänge durchführen. Insbesondere ganz allgemein besitzen Sechsachsroboter sechs Freiheitsgrade, um als Knickarmroboter für die Aufnahme von Teilen vorgesehen zu sein. Durch den Aufbau eines Sechsachsroboters ist es möglich im Arbeitsraum des Sechsachsroboters jeden Punkt aus jeder Richtung kommend frei anzugreifen.

Ein SCARA-Roboter ist ein vierachsiger Roboter, wobei SCARA für "Selective Compliance Assembly Robot Arm" steht. Dabei weist der Arm drei Rotationsachsen und eine Linearachse auf. Er kann auch Horizontal-Knickarmroboter bezeichnet werden. Dieser Robotertyp kann für einfachere Aufgaben des Setzens vorgesehen sein, insbesondere bei geringeren Geschwindigkeiten, etwa des Setzens und/oder des Transports des Schüttguts auf der ersten Födervorrichtung. Dabei kann der SCARA-Roboter Ressourcen sparen, da er einfacher konstruiert sein kann, verglichen mit den anderen Robotertypen, die hierin beschrieben sind.

Eine dreiachsig verfahrbare Robotereinrichtung ist insbesondere ein System, bei dem mindestens drei Achsen (Gelenke) benutzt werden, um eine Bewegung des Roboters im Raum zu ermöglichen. Diese Art von Roboterarm kann in verschiedenen Richtungen und Winkeln bewegt werden und ist besonders nützlich für Aufgaben, die eine hohe Präzision erfordern.

Dreiachsig verfahrbare Robotereinrichtungen erlauben Bewegungen insbesondere in allen drei euklidischen Dimensionen X-, Y- und Z-Richtung. Diese können insbesondere erlauben, dass sie als Setzroboter keine Hebevorrichtung, wie sie für die zweite Fördervorrichtung an anderer Stelle hierin als Aufbaubereich beschrieben ist, erfordern, da sie im Raum operieren können und nicht lediglich in einer Operationsebene, wie beispielsweise besonders für die Deltaroboter.

Nach einem Aspekt kann die mindestens eine Sensorvorrichtung ausgebildet und eingerichtet sein, um sich berührende - alternativ oder zusätzlich sich überlagernde - Teile des Schüttguts zu erfassen und die Erfassung als Information der Steuereinrichtung zur Verfügung zu stellen. Die Steuereinrichtung ist insbesondere ausgebildet und eingerichtet, um mindestens eines ausgewählt aus einer Art, einer Form oder einer Dimension des Teils des Schüttguts zu definieren, um darauf aufbauend den mindestens einen Setzroboter derart anzusteuern, um ein für den weiteren Aufbau der Packeinheit passendes Teil aus einer Teileüberlagerung zu entnehmen.

Dabei kann insbesondere in Form einer Logik abgelegt sein, welche Überlappszenarien und/oder Berührungsszenarien vorliegen können, um dadurch definiert eine entsprechende Situationsformation sortieren und bewerten zu können. In anderen Ausführungenformen können Maschinenlernalgorithmen eingesetzt werden, um entsprechend die Information, insbesondere in Form einer Bildinformation und/oder in Form einer Abstandskarte, auswerten zu können. Das entsprechende Maschinenlernmodell kann dabei anhand von Bildinformationen und/oder Abstandskarten trainiert worden sein, um entsprechend die Informationen zu erlernen, die bestimmten Mustern zu Grunde liegen, die derartige Berührsituationen und/oder Abstandssituationen und/oder Überlappsituationen erzeugen.

Die Form kann sich insbesondere auf die Grundfläche eines Teils beziehen, während sich die Art des Teils auf dessen generelle Grundstruktur beziehen kann, etwa ein Schnittstück aus der Mitte eines Baumstamms und/oder ein Schnittstück aus einem Rand-/Rindenbereich eines Baumstamms. Demgegenüber können die Dimension Auskunft darüber geben über die Größe, insbesondere mindestens eines ausgewählt aus Länge, Höhe oder Breite.

Dies erlaubt bei einem Aufbaubereich, der vorgesehen ist, wenn nur eine Packeinheit aufgebaut werden soll, den Umlauf entsprechender Teile zu entnehmen, die für einen Aufbau zum gegebenen Zeitpunkt am effizientesten (entsprechend geringer Zeit, geringer Ressourcen und/oder geringer Energieaufwand) zum Ergebnis einer fertigen Packeinheit führen.

Dadurch ist es bei dem Einsatz mehrerer Setzroboter und auch mehrerer Aufbaubereiche möglich, dass die Steuereinrichtung festlegen kann, welcher Setzroboter welches Teil aufnimmt und welchem Aufbaubereich es zugeführt werden soll. Es kann auch Ausführungsformen geben, bei denen mehrere Setzroboter einen Aufbaubereich bedienen können, weshalb die Steuereinrichtung entsprechend ausgebildet und eingerichtet sein kann die Setzroboter miteinander zu koordinieren, um etwa eine Kollision vermeiden zu können. Dabei kann die Steuereinrichtung auch ausgebildet und eingerichtet sein, um ein umlaufendes Teil von dem Setzroboter aufnehmen zu lassen, der am effizientesten das Teil, bspw. über einen möglichst geringen Bewegungsaufwand an eine vorhergesagte Position zu bewegen.

In einer Ausführungsform kann vorgesehen sein, dass eine Sensorvorrichtung als Bildaufnahmevorrichtung ausgebildet ist. Es kann sich, insbesondere um eines von einer Kamera, einem RADAR oder einem LIDAR handeln, weiter insbesondere in Form einer Kombination verschiedener Sensoren.

Wie an anderer Stelle hierin beschrieben kann es sich bei der Sensorvorrichtung um einen 3D-Scanner mit Conveyor Tracking handeln, der eine 3D-Punktwolke erzeugen kann, deren zugrundeliegende Form und Dimensionierung geschätzt werden kann, insbesondere von der Steuereinrichtung, um einen Rückschluss auf die Art des Schüttguts, insbesondere der Leiste, zu ermitteln, die verbaut werden soll. Dabei kann insbesondere in einer Ausführungsform schon vorab zur Anlieferung des Schüttguts, insbesondere der Leisten, weiter insbesondere der Holzleisten, an die erste Fördervorrichtung übermittelt werden, von der Sägevorrichtung beispielsweise an das Leitsystem, welche Teile des Schüttguts, insbesondere welche Leisten, weiter insbesondere welche Holzleisten, erzeugt werden. Diese Art der Teile kann/können als 3D-Modell übermittelt werden, welche dann mit den ermittelten Punktwolken abgeglichen werden können. Dadurch kann eine Vorhersage getroffen werden, welche Teile des Schüttguts, insbesondere welche Leisten, weiter insbesondere welche Holzleisten, eine Berührsituation und/oder einen Überlapp mit größter Wahrscheinlichkeit ausbilden. Entsprechend kann ein Schwerpunkt den Teilwolken - wenn die Berührsituation oder der Überlapp eine Gesamtwolke darstellt - zugewiesen werden, um ein Aufnehmen mindestens eines Teils zu ermöglichen, um dadurch eine Berührsituation und/oder einen Überlapp auflösen zu können. Insbesondere kann mindestens ein Teil aus einer solchen Situation übernommen werden, um dieses in einen Aufbaubereich - auf eine Pre-Packeinheit - zu übertragen.

Nach einem Aspekt kann eine Schüttvorrichtung ausgebildet sein, die das Schüttgut auf die erste Fördervorrichtung schüttet. Dadurch ist es möglich, auf einfache Art und Weise, das Schüttgut auf die erste Fördervorrichtung zu überführen, da keine Vorsortierung in Form von Vororientierung und/oder Längensortierung gegeben sein muss. Vielmehr kann ein Vorsortierschritt sich darauf beschränken, dass Teile einer Vorstufe des Schüttguts und/oder Schüttgutteile aussortiert werden, die aus gegebenen Gründen, wie etwa struktureller Schwäche und/oder Elementen, die die Qualität reduzieren, etwa weil sie keine stabile Stapelung erlauben und damit ein Setzen in einem Aufbaubereich zu einer Prepackeinheit verhindern und/oder erschweren würden.

Nach einem Aspekt kann die erste Fördereinrichtung über eine Breite der Fördereinrichtung im Bereich eines Erfassens (als Sensorbereich zu bezeichnen) der geförderten Teile durch die mindestens eine Sensorvorrichtung zwischen 50 und 500 Teilen pro Minute, alternativ pro Stunde, fördern. Insbesondere können zwischen 100 und 400 Teilen pro Minute, alternativ pro Stunde durch den Sensorbereich befördert werden. Weiter insbesondere können zwischen 150 und 360 Teilen pro Minute, alternativ pro Stunde, weiter insbesondere 240 Teilen pro Minute, alternativ pro Stunde durch den Sensorbereich gefördert werden. Dadurch kann insbesondere vorgesehen sein, dass bei hohen Geschwindigkeiten der ersten Fördervorrichtung und entsprechend hoher Geschwindigkeit des Setzroboters gearbeitet werden kann. Damit kann ein entsprechend schneller Aufbau einer Packeinheit ermöglicht werden, was Ressourcen in Form von Lagerkosten in der Setzanlage reduzieren kann.

In Ausführungsformen kann vorgesehen sein, dass zwischen 100 und 400 Teilen auf der ersten Fördervorrichtung umlaufen können, insbesondere zwischen 150 und 360 Teilen, weiter insbesondere 240 Teile auf der ersten Fördervorrichtung umlaufen können. Dadurch kann eine Gesamtfördermenge der ersten Fördervorrichtung angegeben sein.

In Ausführungsformen können die zu fördernden und zu sortierenden Teile dabei insbesondere eine Länge zwischen 50 mm und 2000 mm, insbesondere zwischen 100 mm und 1500 mm, weiter insbesondere zwischen 200 mm und 1050 mm aufweisen. In Ausführungsformen können die zu fördernden und zu sortierenden Teile eine Breite zwischen 20 mm und 200 mm, insbesondere zwischen 40 mm und 150 mm, weiter insbesondere zwischen 42 mm und 150 mm aufweisen. Die Teile des Schüttguts können eine Höhe (sprich auch: Stärke) zwischen 10 mm und 100 mm haben, insbesondere zwischen 20 mm und 50 mm, weiter insbesondere zwischen 24 mm und 30 mm aufweisen.

Es kann insbesondere eine rechteckige, weiter insbesondere eine quadratische Grundfläche einer (Pre-)Packeinheit vorgesehen sein.

Nach einem Aspekt kann die Steuereinrichtung ausgebildet und eingerichtet sein, um den Abschluss des Aufbaus der Packeinheit zu bestimmen, um die zweite Fördervorrichtung zu betätigen, um die fertiggestellte Packeinheit aus der Setzanlage zu befördern.

Dabei kann sich die an anderer Stelle hierin beschriebene Hebevorrichtung insbesondere bei Beladung der Prepackeinheit mit Teilen über die Ausbildung der Prepackeinheit bis zur Packeinheit absenken und durch das Erreichen eines Levels mit einer Horizontalfördervorrichtung der zweiten Fördervorrichtung die Horizontalfördervorrichtung der zweiten Fördervorrichtung betätigen, um ein Abtransportieren der Packeinheit zu ermöglichen.

Es kann insbesondere vorgesehen sein, dass der Aufbaubereich auf einem sogenannten Rechen als Hebevorrichtung angeordnet sein kann, der derart ausgebildet und orientiert ist, dass Streben es erlauben das Schüttgut orientiert aufzunehmen, um eine (Pre-)Packeinheit aufbauen zu können, die aber auch erlauben in einer Höhenposition zwischen Linearförderern der Horizontalfördervorrichtung der zweiten Fördervorrichtung hindurchzutauchen, um dadurch einen Übertrag der, insbesondere finalisierten, Packeinheit auf die Horizontalfördervorrichtung der zweiten Fördervorrichtung zu ermöglichen.

Es kann also Ausführungsformen geben, in denen eine zweite Fördervorrichtung vorgesehen ist, die mindestens teilweise als lineare Fördervorrichtung ausgebildet sein kann, die mindestens teilweise parallel zu der ersten Fördervorrichtung verlaufen kann, um dadurch fertige Packeinheiten aus der Setzanlage abtransportieren zu können, bspw. um sie einer Verpackstation zuführen zu können, in denen die Packeinheiten mit einer Folie umwickelt werden können. Die zweite Fördervorrichtung kann dabei einen Förderweg ausbilden, auf dem die fertigen Packeinheiten aus der Setzanlage befördert werden können.

In anderen Ausführungsformen kann vorgesehen sein, dass die Packeinheit eine vordefinierte Höhe (entsprechend auch Tiefe und/oder Breite) aufweist, die es zu erreichen gilt, wobei bei Erreichen der entsprechenden Dimensionierung ein Abtransport, etwa über das Betätigen einer Horizontalfördervorrichtung, initialisiert wird, um das weitere Übertragen und Absetzen von Teilen von der ersten Fördervorrichtung zu verhindern und den Aufbau für beendet zu erklären, um die Packeinheit aus der Setzanlage durch Abtransport zu entfernen.

Nach einem Aspekt kann die Setzanlage ausgebildet und eingerichtet sein, um mehrere Packeinheiten zeitlich überlappend aufzubauen. Die Steuereinrichtung ist insbesondere ausgebildet und eingerichtet, um die Verteilung der Teile über die mehreren Aufbaubereiche derart zu organisieren, dass die Packeinheiten staufrei aus der Setzanlage befördert werden können. Dies gilt insbesondere über einen Förderweg, den sich mindestens zwei Packeinheiten nach Fertigstellung von deren Aufbau teilen. Alternativ oder zusätzlich kann die Setzanlage ausgebildet und eingerichtet sein, um mehrere Packeinheiten zeitlich überlappend aufzubauen, wobei die Steuereinrichtung ausgebildet und eingerichtet ist, um über eine Logik einen Abtransport fertiger Packeinheiten zu koordinieren, derart, um einen Stau im Förderweg zu vermeiden.

Eine Setzanlage, die so ausgebildet und eingerichtet ist, dass sie mehrere Packeinheiten zeitlich überlappend aufbauen kann, ist insbesondere eine effiziente und produktive Lösung für den Aufbau von Schüttgut-Packinheiten. Die Steuereinrichtung ist insbesondere entsprechend programmiert, um die Verteilung der Teile über mehrere Aufbaubereiche zu organisieren, um sicherzustellen, dass die Packeinheiten staufrei aus der Setzanlage befördert werden können. "Staufrei" bedeutet hierbei insbesondere, dass die Packeinheiten nicht durch andere, bereits fertiggestellte Packungen blockiert werden können und einen ungehinderten Zugang zu ihren Förderwegen haben können.

Ein Förderweg ist insbesondere ein Pfad, der von einer Quelle (in diesem Fall dem Aufbaubereich der Setzanlage) zu einem Ziel (z.B. der Ausgabe der Setzanlage an ein Lager oder an eine Verarbeitungsstation, wie etwa eine Verpackstation) führt und über den die Packeinheiten befördert werden können.

Wenn mehrere Packeinheiten einen gemeinsamen Förderweg nutzen, können sie sich diesen teilen, d.h. die Steuereinrichtung kann den Aufbau der Packeinheiten und/oder deren Überführung vom Aufbaubereich in den Förderweg koordinieren, um den Weg freizugeben bzw. freizulassen und andere Packeinheiten auf dem Förderweg nicht zu blockieren.

Es kann vorgesehen sein, dass die Hebevorrichtungen eine Packeinheit bzw. eine Prepackeinheit temporär wieder anheben, um eine Passage einer anderen Packeinheit zu ermöglichen. Dies ist insbesondere bei Hebevorrichtungen möglich, die sich etwa als Ketten- oder Rollenförderer in die Ketten und/oder Rollen einer Horizontalfördervorrichtung einbetten lassen, bei vollständigem Absenken beispielsweise. Entsprechendes gilt für einen Rechen, der insbesondere auch unter die Horizontalfördervorrichtung tauchen kann. Dadurch kann auch eine aufgenommene Packeinheit oder Prepackeinheit wieder direkt angehoben werden, also insbesondere ohne eine vorige Richtungsänderung in der Horizontalförderebene.

In Ausführungsformen kann vorgesehen sein, dass Sensoren die auf der mindestens einen Horizontalfördervorrichtung der zweiten Fördervorrichtung angeordnet sind überwacht werden, um dadurch deren Position einer Steuereinrichtung übermitteln zu können, damit diese mittels einer Logik eine Beförderung bevorzugen oder vernachlässigen kann, um einen Stau auf dem Förderweg, aber auch in nachgelagerten Stationen, wie etwa in einer Verpackstation vorzubeugen. Dadurch kann ein Aufbau ungehindert erfolgen, ggf. unterbrochen von einem befristeten Anheben durch die Hebevorrichtungen, während der Fokus der Koordination durch die Steuereinrichtung auf einem Abtransport über einen Förderweg mittels einer Logik liegt.

Nach einem unabhängigen Aspekt kann die Aufgabe durch ein Verfahren gelöst werden.

Das Verfahren kann zum Setzen, und insbesondere Orientieren, von setzbarem, insbesondere orientierbarem, Schüttgut ausgebildet sein.

Das Verfahren weist insbesondere den Schritt eines Erfassens, mittels mindestens einer Sensorvorrichtung, von auf einer ersten Fördereinrichtung geförderten Teilen eines Schüttguts, auf.

Das Verfahren weist insbesondere den Schritt eines Übermittelns einer Information aus dem Erfassen von auf der ersten Fördereinrichtung geförderten Teilen des Schüttguts an eine Steuereinrichtung auf.

Das Verfahren weist insbesondere den Schritt eines Ermittelns einer Vorhersage, basierend auf der Information von der Sensorvorrichtung, welches einzelne Teil des Schüttguts wann zu nehmen und wo in einem Aufbaubereich, insbesondere auf einer Pre-Packeinheit, abzusetzen ist, um im Aufbaubereich eine Packeinheit aufzubauen, auf.

Das Verfahren weist insbesondere den Schritt eines Ansteuerns eines Setzroboters, mittels einer Steuereinrichtung, auf, um, insbesondere mittels des mindestens einen Setzroboters, mindestens ein einzelnes Teil des Schüttguts von der ersten Fördervorrichtung in den Aufbaubereich zu übertragen und in dem Aufbaubereich abzusetzen, insbesondere um ein einzelnes Teil auf eine Prepackeinheit zu setzen, um die Packeinheit des Schüttguts aufzubauen.

Das Verfahren weist insbesondere eine Rezepturverwaltung auf. Dabei kann eine Rezepturverwaltung folgende Schritte aufweisen: Es werden Muster für Lagenbilder auf der (Pre-)packeinheit erzeugt. Es kann ein Setzen des setzbaren, insbesondere orientierbaren, Schüttguts, wie etwa Leisten, insbesondere Holzleisten, in den definierten Lagenbildern lageweise auf die Prepackeinheit gesetzt werden. Dabei wird insbesondere erste eine Lage vervollständigt, bevor eine weitere Lage begonnen wird.

In Ausführungsformen kann ein Setzroboter mehrere Aufbaubereiche bedienen, insbesondere mindestens drei. Dabei kann über die Steuereinrichtung - auch als Leitsystem zu bezeichnen - entsprechend ein Aufbau von mehreren Packeinheiten parallel erfolgen. Dabei kann insbesondere ein lageweiser Aufbau vorgesehen sein. Die Aufbaubereiche können unterschiedliche Packmuster aufweisen oder auch dasselbe Packmuster. Es können auch dieselbe Art von Teilen des Schüttguts für alle Aufbaubereiche vorgesehen sein. Alternativ können sich die aufzubauenden (Pre-)Packeinheiten aber auch in den verwendeten Teilen des Schüttguts unterscheiden. Dabei kann eine erste Art von Teil für eine (Pre-)Packeinheit vorgesehen sein, während eine zweite Art von Teil für eine zweite (Pre-)Packeinheit vorgesehen ist und wobei eine dritte Art von Teil für eine dritte (Pre-)Packeinheit vorgesehen sein kann. Es versteht sich, dass verschiedene Kombinationen vorgesehen sein können, wie den Aufbaubereichen Packmuster zugewiesen werden können, insbesondere aus identischen Teilen oder verschiedenen Teilen für die darin aufzubauenden (Pre-)Packeinheiten. Entsprechendes gilt auch für die verschiedenen Aufbauebereiche, die von verschiedenen Setzrobotern bedient werden können, sofern in Ausführungsformen derartige mehrere Setzroboter vorgesehen sind.

Es kann also sogenannte Runner geben, das sind Aufbaubereiche, in denen jeweils identische, oft anfallende Leisten in Packmustern verbaut werden können. Andere Aufbaubereiche können noch einen Aufbau ermöglichen, mit einer bestimmten Art von Schüttgut, insbesondere Leiste, weiter insbesondere Holzleiste, die seltener (im Vorprozess) auftritt.

Es werden insbesondere die einzelnen Teile des Schüttguts, insbesondere der Leisten, weiter insbesondere der Holzleisten, nach ihrer Dimensionierung (Länge, Breite, Höhe) auf einen Stapel (der Packeinheit bzw. Prepackeinheit) sortiert, wobei die Sortierung identischer Teile auf jeweils einen Stapel erfolgen kann. Es können mehrere Stapel existieren, auf die jeweils eine Art von Teil des Schüttguts sortiert werden kann. Dabei werden die verschiedenen Teile auf verschiedene Stapel sortiert, wobei bei Beginn des Aufbaus einem Aufbaubereich eine Art Teil zugeordnet wird, um einen Aufbau mit dieser Art von Teil durchzuführen.

Es können also verschiedene Packmuster definiert und dann erzeugt werden, um eine fertiggestellte Packeinheit aufzubauen. Das Packmuster kann sich insbesondere an Vorgaben eines Abnehmers und/oder eines Lieferdienstes orientieren, um die Packeinheit versenden zu können.

Als letzten Schritt kann ein Umhüllen der Packeinheit mit einer Verpackung, insbesondere mit einer Folie vorgesehen sein, um einen Transport zu ermöglichen, ohne dass die Packeinheit durch ein Anheben oder Bewegen wieder auseinanderfallen würde.

Nach einem unabhängigen Aspekt kann die Aufgabe durch eine Steuereinrichtung gelöst werden. Die Steuereinrichtung kann ausgebildet und eingerichtet sein, um das oben und auch an anderer Stelle hierin beschriebene Verfahren durchzuführen. Dazu kann die Steuereinrichtung eine Setzanlage, wie sie an anderer Stelle hierin beschrieben ist, steuern, um die entsprechenden Schritte des Verfahrens mindestens teilweise - in Ausführungsformen auch alle genannten und ggf. auch weitere Schritte - durchzuführen.

Nach einem unabhängigen Aspekt kann die Aufgabe durch ein Computerprogrammprodukt gelöst werden. Das Computerprogrammprodukt weist insbesondere maschinenlesbare Anweisungen auf, die, wenn sie auf einer Steuereinrichtung von der oben und auch an anderer Stelle hierin beschriebenen Art ausgeführt werden, die Steuereinrichtung derart anweisen tätig zu werden, dass ein Verfahren von der oben und auch an anderer Stelle hierin beschriebenen Art in einer Setzanlage von der oben und auch an anderer Stelle hierin beschriebenen Art durchgeführt wird.

Ein Computerprogrammprodukt, das maschinenlesbare Anweisungen aufweist, ist insbesondere eine Sammlung von Anweisungen, die von einem Computer als Beispiel für eine Steuereinrichtung lesbar und verständlich sind. Diese Anweisungen sind insbesondere speziell darauf ausgelegt, von einer Steuereinrichtung interpretiert zu werden, um eine bestimmte Aktion oder ein Verfahren in einer Setzanlage auszuführen. Wenn diese maschinenlesbaren Anweisungen auf der oben und auch an anderer Stelle hierin beschriebenen Steuereinrichtung ausgeführt werden, wird die Steuereinrichtung insbesondere so konfiguriert, dass das Verfahren wie beschrieben stattfinden kann.

Maschinenlesbare Anweisungen sind insbesondere Anweisungen, die von einem Computer direkt interpretiert und ausgeführt werden können, ohne dass menschliches Eingreifen erforderlich wäre. Diese Anweisungen können in verschiedenen Programmiersprachen geschrieben sein, wie z.B. C, C++, Java oder Python. Sie dienen insbesondere dazu, bestimmte Aufgaben automatisch auszuführen als Teil des oben und an anderer Stelle hierin beschriebenen Setzanlage als automatisiertem System für einen Aufbau als Produktionsprozess. Insbesondere gelten die zuvor gemachten Ausführungen in Bezug auf das Verfahren in entsprechender Weise auch für die Steuereinrichtung, das Computerprogrammprodukt und für die Setzanlage entsprechend fort. Auch kann eine Speichereinrichtung vorgesehen sein, die das Computerprogrammprodukt aufweisen kann. Weiter lässt sich das Verfahren durch die Merkmale, Vorteile, Effekte und Ausführungsformen der Steuereinrichtung, des Computerprogrammprodukts, der Speichereinrichtung und der Setzanlage spezifizieren. Entsprechendes gilt für die Funktionen. Verfahren, Vorrichtung und System lassen sich durch die Merkmale, Vorteile und Funktionen der jeweils anderen Kategorie, bzw. Kategorien beschreiben. Damit kann, wie schon eingehend erwähnt, wechselseitig zwischen den einzelnen Aspekten Bezug hergestellt werden.

Der Schutzumfang bestimmt sich nach dem Inhalt der Ansprüche. Ausführungsformen und Fortbildungen werden durch die abhängigen Ansprüche beschrieben. Im Folgenden werden zur weiteren Verdeutlichung Ausführungsformen in den Figuren beschrieben.

Dabei zeigen
- Fig. 1: eine exemplarische Herstellungssituation von Schüttgut, das in einer verwendeten beispielhaften Ausführungsform einer Setzanlage zu einer Packeinheit gesetzt werden kann, wie in Fig. 2 gezeigt und diesbezüglich beschrieben;
- Fig. 2A: eine exemplarische Verwendung einer Sensorvorrichtung und einer ersten Fördervorrichtung, um das Schüttgut aus der Fig. 1 zu erfassen;
- Fig. 2B: exemplarische Ausführungsformen von Prepackeinheiten, die zu Packeinheiten aufgebaut werden;
- Fig. 3: eine schematische Darstellung einer exemplarischen Ausführungsform eines Verfahrens;
- Fig. 4: eine exemplarische Ausführungsform einer Setzanlage in Draufsicht;
- Fig. 5: die exemplarische Ausführungsform der Setzanlage in Unteransicht;
- Fig. 6: die exemplarische Ausführungsform der Setzanlage in Seitenansicht;
- Fig. 7A: eine Teilansicht der exemplarischen Ausführungsform der Setzanlage;
- Fig. 7B: eine Teilansicht der exemplarischen Ausführungsform der Setzanlage.

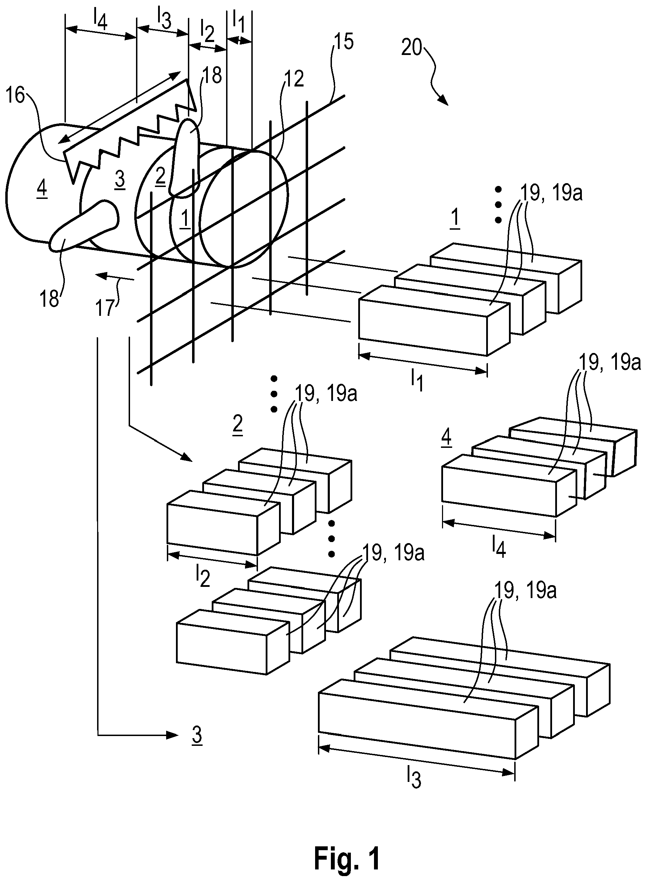

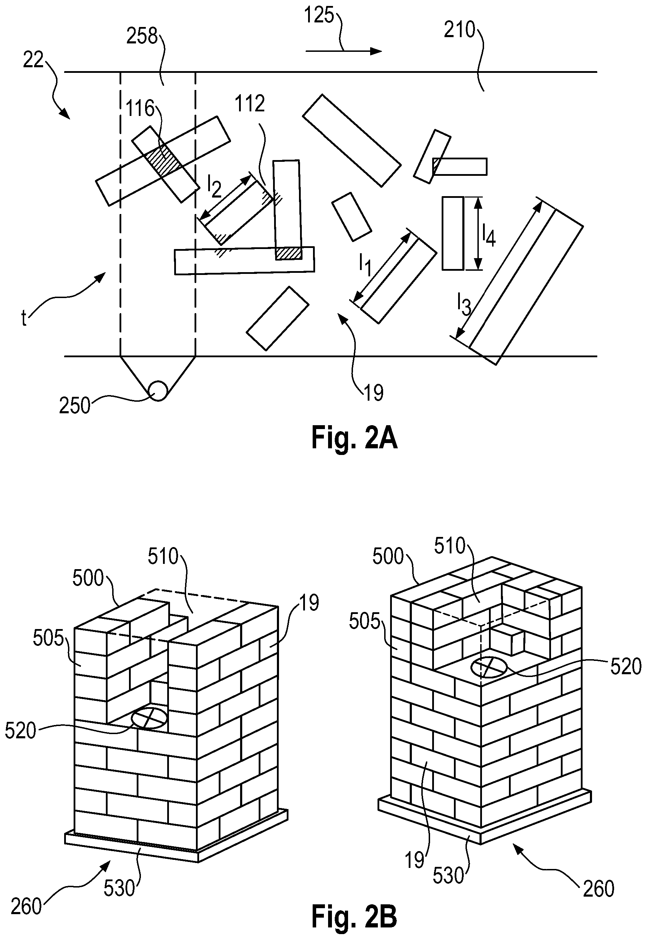

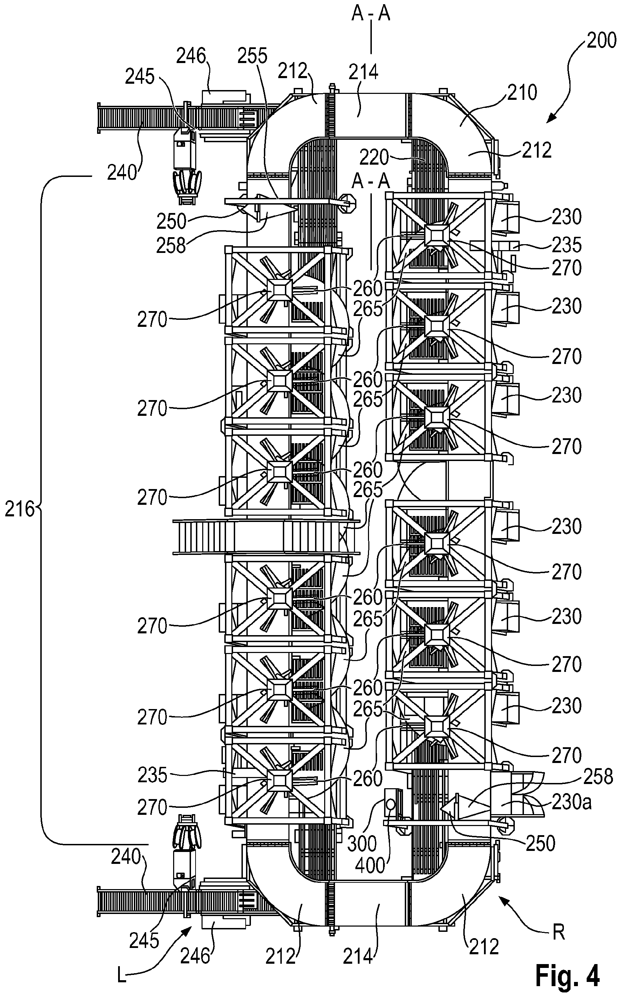

Fig. 1 zeigt eine exemplarische Herstellungssituation 20 von Schüttgut 19, das in einer verwendeten beispielhaften Ausführungsform einer Setzanlage 200, wie sie in den Fig. 4 bis 7B dargestellt und diesbezüglich beschrieben ist, zu Packeinheiten 500 gesetzt werden können, wie sie in Fig. 2 gezeigt und diesbezüglich beschrieben sind. Die in der Fig. 1 dargestellte Herstellungssituation 20 von Schüttgut 19 bezieht sich dabei insbesondere auf die Herstellung von Holzschnitt, der insbesondere als Quader, teilweise auch mit rechteckiger Grundform aus einem Stamm 12 mittels Sägen 15, 16 geschnitten wird. Dabei ergibt sich die Schwierigkeit, dass Astlöcher 18 oder Einschlüsse in einem entsprechenden Holzschnitt zu niederwertigem Schüttgut führen können. Das Schüttgut 19 kann auch als Menge von Holzleisten 19a bezeichnet werden. Ein Teil eines solchen Schüttguts 19 ist als eine Holzleiste 19a zu bezeichnen.

Dabei werden insbesondere derartige Segmente direkt nach einem Schneiden durch eine Horizontalsäge 16 aussortiert, um einen Eintrag entsprechenden Schnittguts 19 zu verhindern. Hier sind exemplarisch einmal die Chargen 1 und 3 entsprechend minderwertig. In der hier gezeigten Ausführungsform werden diese noch von Sägen 15 zu Schnittgut 19 mitgeschnitten, aber direkt danach werden die gesamten Bereiche des Holzschnitts der Chargen 1, 3 verworfen. Es kann auch Ausführungsformen geben in denen bereits unmittelbar nach einem Sägen durch die Horizontalsäge 16 die geschnittene Stammscheibe der Chargen 1, 3 verworfen würde und nicht erst nach dem Schneiden durch die Sägen 15. Dies schont insbesondere die Sägen 15, da sie weniger Material sägen müssen.

Die Position und Anordnung von Astlöchern 18 oder Einschlüssen in einer Längenrichtung 17 eines Baumstamms ist dabei rein statistisch und zufällig verteilt, weshalb die qualitativ hochwertigen Abschnitte unterschiedliche Längen 1 aufweisen können, wobei deren Länge 1 ebenfalls statistisch rein zufällig verteilt sein kann, abhängig von den nächsten Astlöchern 18 oder Einschlüssen, die auf das letzte Astloch 18 oder den letzten Einschluss in Längenrichtung 17 des Baumstamms folgen.

Aus diesem Grund ergeben sich verschiedene Chargen 1, 2, 3, 4 von Schüttgut 19, welches unterschiedliche Längen l1 bis l4 aufweisen können. In Ausführungformen kann vorgesehen sein, dass auch Schnittgut als Schüttgut 19, welches die Sägen 15 passiert hat und Astlöcher 18 aufweist, nach dem Schneiden durch die Sägen 15 aussortiert wird. In anderen Ausführungsformen kann direkt nach einem Schneiden mit einer Horizontalsäge 16 aussortiert werden. Auch die Anordnung der Horizontalsäge 16 und der Sägen 15 kann in Ausführungsformen invertiert sein.

Es kann insbesondere vorgesehen sein, dass die Vorrichtung mit den Sägen 16, 15 den Baumstamm in einer Längsrichtung 17 scannt, etwa durch Röntgen, um Astlöcher 18 und Einschlüsse vorhersagen zu können. Dadurch können die entstehenden Holzleisten 19a vorhergesagt werden, wenn der Verschnitt des Baumstamms reduziert werden soll, um einen möglichst geringen Abfall von Holzverschnitt zu erzeugen. Diese Vorhersage kann über eine Steuereinrichtung 300 erfolgen, wie sie an anderer Stelle hierin beschrieben ist. Die Steuereinrichtung 300 kann somit als Leitsystem für sowohl die Sägevorrichtung, als auch für die Setzanlage 200 vorgesehen sein, um die Steuerung übernehmen zu können. Dadurch kann auch der Steuereinrichtung 300 zur Verfügung stehen, welche Teile des Schüttguts 19 als Holzleisten 19a angeliefert werden können, um über eine an anderer Stelle hierin beschriebene Sensorvorrichtung 250 die angeliferten Holzleisten erfassen zu können, etwa als 3D-Punktwolken, um auch Überlapp und Berührsituationen auflösen zu können.

In der Fig. 2A sind insbesondere alle Längen gezeigt, auch die der minderwertigen Chargen 1, 3. Dies ist dem schematischen und exemplarischen Umstand geschuldet, dass hier Teile mit einer entsprechenden Länge auch nach dem Verwerfen minderwertiger Teile vorliegen können, etwa aus anderen Baumabschnitten. Diese Darstellungen dienen insbesondere der Darstellung des zugrundeliegenden Prinzips. Es ist dennoch vorgesehen minderwertige Chargen 1, 3 nicht auf die erste Fördervorrichtung 210 zu transferieren (zu schütten).

In Ausführungsformen kann aber auch vorgesehen sein, dass die Sensorvorrichtung 250, wie sie in den Fig. 4 bis 7B dargestellt ist, ausgebildet und eingerichtet ist, um mit der Steuereinrichtung 300 derartige, etwa fehlerhaft auf die erste Fördervorrichtung 210 geschüttete, minderwertige Teile von minderwertigen Chargen 1, 3 zu identifizieren, um sie ggf. durch einen Setzroboter 270 aus dem geförderten Schüttgut 19 zu entfernen und nachträglich noch zu verwerfen, etwa in einen Müllcontainer.

Ausgehend von der in der Fig. 1 schematisch dargestellten Herstellungssituation 20 für Schüttgut 19 ist nun insbesondere dafür zu sorgen, dass unterschiedlich lange Teile von Schüttgut 19 entsprechend zu transportieren sind, insbesondere in einer möglichst dicht gepackten Form, insbesondere als Packeinheiten 500, wie sie in der Figur 2B exemplarisch und schematisch dargestellt sind. Hier und im Folgenden ist in Bezug von Schüttgut 19 die Rede, aber in speziellen Ausführungsformen kann es sich dabei um Holzleisten 19a handeln. Dies steht der allgemeinen Verwendung von Schüttgut 19 in anderen Ausführungsformen nicht entgegen.

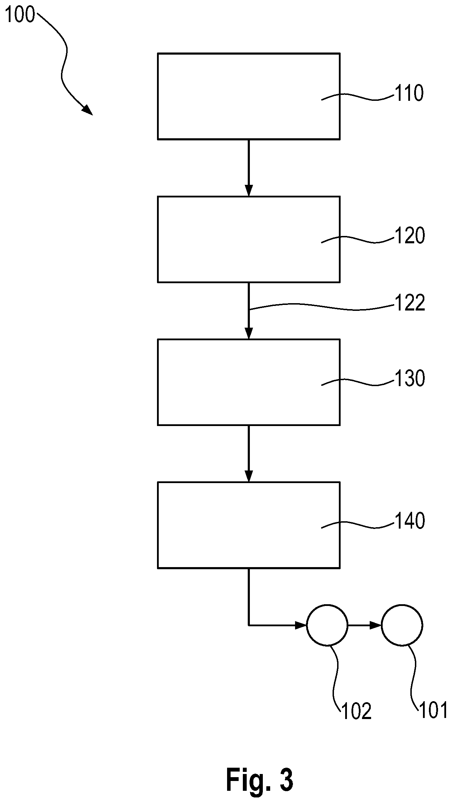

Fig. 2A zeigt eine exemplarische Verwendung 22 einer Sensorvorrichtung 250 (in Fig. 4 dargestellt) und einer ersten Fördervorrichtung 210, um das Schüttgut 19 aus der Herstellung 20, wie sie in Fig. 1 dargestellt und diesbezüglich beschrieben ist, zu erfassen. Das Erfassen 110 ist dabei insbesondere ein Schritt eines Verfahrens 100, wie es in Fig. 3 als eine schematische Darstellung einer exemplarischen Ausführungsform eines Verfahrens 100 dargestellt und diesbezüglich beschrieben ist. Wie in der Figur 2A gezeigt ist eine Fördervorrichtung 210 ausgebildet und eingerichtet, um in einer Förderrichtung 125 das Schüttgut 19 transportieren zu können. Dabei passiert das Schüttgut 19 entsprechend den Sensorbereich 258 einer Sensorvorrichtung 250. Dabei dient der Sensorbereich 258 dem Erfassen 110 des Schüttguts 19, insbesondere in Bezug auf eine Überlappsituation 116 und/oder Berührsituation 112. Wie auch schon in Bezug auf die Fig. 1 beschrieben können sich verschiedene Chargen 1 bis 4 in der jeweiligen Länge l1 bis l4 unterscheiden. Hier werden prinzipiell die Längen l referenziert, in Bezug auf die (minderwertigen) Chargen 1, 3 wird auf die vorigen Ausführungen hierin verwiesen. Die Orientierung und Anordnung der Teile des Schüttguts 19 ist dabei rein zufällig, "wie es fällt, so liegt es". Durch die im Folgenden beschriebene Setzanlage 200 ist insbesondere eine Vorsortierung und/oder sogar eine händische Orientierung der Teile des Schüttguts 19 nicht erforderlich, was Ressourcen spart. Darüber hinaus wäre eine entsprechende Geschwindigkeit, wie sie beschrieben wird, in Bezug auf das Verfahren durch händische Arbeit nicht darstellbar (mehrere hundert Teile pro Minute).

Es wird hier insbesondere auf die Möglichkeit verwiesen, dass die Sensorvorrichtung 250 eine Vorrichtung zum "3D Conveyor Tracking" (Abbildung der Fördervorrichtung 210 und des darauf befindlichen Schüttguts 19 in einer 3D-Modellierung) ist, die ein 3D-Modell des Schüttguts 19, insbesondere der Holzleisten 19a, erstellt, etwa als Punktwolken.

Dabei kann auch seitens der Steuereinrichtung 300 ein Schwerpunkt für ein Ansetzen eines Setzroboters 270 ermittelt (vorhergesagt) werden.

Auch kann ein Abgleich mit 3D-Modellen von möglicherweise angeliefertem Schüttgut 19, insbesondere Holzleisten 19a, erfolgen, um Berührsituationen 112 und Überlappsituationen 116 auflösen zu können. Die 3D-Modelle können von der Sägevorrichtung übermittelt werden, wie an anderer Stelle hierin beschrieben. Die 3D-Modelle können auch entsprechend die Vorhersage der Art und Dimensionierung eines vereinzelten Teils des Schüttguts, insbesondere der Holzleisten, verbessern.

Fig. 2B zeigt exemplarische und schematische Prepackeinheiten 505, um Packeinheiten 500 aufbauen zu können. Wie in den Fig. 2B links und rechts dargestellt kann sich dabei ein Aufbau der Packeinheiten an den zufällig ankommenden Teilen des Schüttguts 19 orientieren, wobei Positionen 520 durch eine Steuereinrichtung 300 (siehe Fig. 4) vorhergesagt werden können, um entsprechend den in der Fig. 2A gezeigten Sensorbereich 258 passierenden Teil des Schüttguts 19 vorherzusagen. Die Vorhersage 130 ist dabei ebenfalls ein Verfahrensschritt eines Verfahrens 100, wie es in Bezug auf Fig. 3 dargestellt und beschrieben ist.

Die Packeinheiten 500 können dabei auf einen Aufbaubereichs 260 insbesondere auf einer Aufbaugrundplatte 530 aufgebaut werden. Anstelle einer Aufbaugrundplatte kann ein Teil einer zweiten Fördervorrichtung, insbesondere eine Hebevorrichtung vorgesehen sein, insbesondere ein Rechen, wie sie an anderer Stelle hierin beschrieben sind. Dabei sind die Positionen 520 in der Regel in Aussparungen 510 angeordnet, die noch nicht mit Schüttgut 19 gefüllt sind. Die Ausführungform auf der linken Seite der Fig. 2B zeigt eine Prepackeinheit 505 mit angedeuteter, aufzubauender Packeinheit 500, die sich von der auf der rechten Seite dargestellten Prepackeinheit 505 und der aufzubauenden Packeinheit 500 in der Anordnung der einzelnen Teile unterscheiden können. Der innere Aufbau ist dabei in Ausführungsformen nicht vorgegeben oder nicht geplant, vorab zum Verfahren, also soll vielmehr eine Außenpackform der Packeinheit 500 erreicht werden, die bei beiden dargestellten Ausführungsformen gleich sein kann, auch wenn sich die innere Struktur unterscheidet. Da die Teile des Schüttguts 19 eine rein zufällige Passage durch den Sensorbereich 258 der Sensorvorrichtung 250 vollziehen, wodurch erst ab diesem Zeitpunkt eine Vorhersage der Positionen 520 dargestellt werden kann, wobei die Steuereinrichtung 300 insbesondere darauf die Vorhersage 130 optimiert, um eine möglichst dichte Packung der Packeinheit 500 erreichen zu können. Dabei kann ein Aussparung 510 in einem Zentralbereich (linke Seite) oder in einem Randbereich (rechte Seite) angeordnet sein. Die Vorhersage kann auch entsprechende Strukturüberlegungen mit sich bringen, welches Teil an welcher Stelle die resultierende Prepackeinheit 505 weiter stabilisieren kann.

In anderen Ausführungsformen kann ein lagenweiser Aufbau erfolgen. Dabei können auf jeder Prepackeinheit 505 identische oder weitestgehend identische Teile angeordnet werden. Dazu können Teile des Schüttguts 19, insbesondere Holzleisten 19a, jeweils in einer Lage auf der Prepackeinheit 505 angeordnet werden. Wenn eine Lage gefüllt ist, dann kann eine weitere Lage in Angriff genommen werden. Dies wiederholt sich solange, bis die Packeinheit 500 fertiggestellt ist und die äußere Dimensionierung mit der vordefinierten Dimensionierung übereinstimmt. Dabei werden insbesondere keine Mischtypen aus verschiedenen Teilen des Schüttguts 19, insbesondere keine verschiedenen Holzleisten 19a in der Prepackeinheit 505 verbaut und entsprechend sind diese auch nicht in der Packeinheit 500 enthalten.

In Ausführungsformen kann ein lagenweiser Aufbau von Lagen zwischen 10 und 20 Lagen erfolgen. Es können weiter insbesondere zwischen 12 und 16 Lagen vorgesehen sein, weiter insbesondere genau 14 Lagen. Die Packeinheit 500 kann ein Stapel sein, der insbesondere eine rechteckige und/oder quadratische Grundfläche aufweist.

In Ausführungsformen kann der Stapel zwischen 300 und 400 mm hoch sein. Insbesondere kann der Stapel zwischen 320 und 370 mm Höhe aufweisen, weiter insbesondere genau 350 mm.

In Ausführungsformen kann der Stapel zwischen 400 und 500 mm breit sein. Insbesondere kann der Stapel zwischen 420 und 470 mm Breite aufweisen, weiter insbesondere genau 450 mm.

Die Holzleisten 19a sind insbesondere eine Länge zwischen 50 mm und 2000 mm, insbesondere zwischen 100 mm und 1500 mm, weiter insbesondere zwischen 200 mm und 1050 mm aufweisen. In Ausführungsformen können die Holzleisten 19a eine Breite zwischen 20 mm und 200 mm, insbesondere zwischen 40 mm und 150 mm, weiter insbesondere zwischen 42 mm und 150 mm aufweisen. Die Holzleisten 19a können eine Höhe (sprich auch: Stärke) zwischen 10 mm und 100 mm haben, insbesondere zwischen 20 mm und 50 mm, weiter insbesondere zwischen 22 mm und 26 mm aufweisen, weiter insbesondere genau 24 mm aufweisen.

Fig. 3 zeigt schematisch eine exemplarische Ausführungsform eines Verfahrens 100, das zum Setzen 101, und insbesondere Orientieren 102, von setzbarem, insbesondere orientierbarem, Schüttgut 19 ausgebildet sein kann, wie dem Holzschnitt, wie er in der Fig. 1 bzw. Fig. 2A und 2B als ein Verwendungsbeispiel gezeigt ist.

Das Verfahren 100 weist in Ausführungsformen insbesondere eine Rezepturverwaltung auf. Dabei kann eine Rezepturverwaltung folgende Schritte aufweisen: Es können Muster für Lagenbilder auf der (Pre-)packeinheit erzeugt werden. Es kann ein Setzen von Holzleisten in den definierten Lagenbildern lageweise auf die Prepackeinheit 500 gesetzt werden. Dabei wird insbesondere erste eine Lage vervollständigt, bevor eine weitere Lage begonnen wird.

In Ausführungsformen kann ein Setzroboter 270 mehrere Aufbaubereiche 260 bedienen, insbesondere mindestens drei. Dabei kann über die Steuereinrichtung 300 - auch als Leitsystem zu bezeichnen - entsprechend ein Aufbau von mehreren Packeinheiten 500 parallel erfolgen. Dabei kann insbesondere ein lageweiser Aufbau vorgesehen sein. Die Aufbaubereiche 260 können unterschiedliche Packmuster aufweisen oder auch dasselbe Packmuster. Es können auch dieselbe Art von Teilen des Schüttguts 19, insbesondere Holzleisten 19a, für alle Aufbaubereiche 260 vorgesehen sein. Alternativ können sich die aufzubauenden (Pre-)Packeinheiten (505,) 500 aber auch in den verwendeten Teilen des Schüttguts 19 unterscheiden. Dabei kann eine erste Art von Teil für eine (Pre-)Packeinheit (505,) 500 vorgesehen sein, während eine zweite Art von Teil für eine zweite (Pre-)Packeinheit (505,) 500 vorgesehen ist und wobei eine dritte Art von Teil für eine dritte (Pre-)Packeinheit (505,) 500 vorgesehen sein kann. Es versteht sich, dass verschiedene Kombinationen vorgesehen sein können, wie den Aufbaubereichen 260 Packmuster zugewiesen werden können, insbesondere aus identischen Teilen oder verschiedenen Teilen für die darin aufzubauenden (Pre-)Packeinheiten (505,) 500. Entsprechendes gilt auch für die verschiedenen Aufbaubereiche 260, die von verschiedenen Setzrobotern 270 bedient werden können, sofern in Ausführungsformen derartige mehrere Setzroboter 270 vorgesehen sind.

Es kann also sogenannte Runner geben, das sind Aufbaubereiche 260, in denen jeweils identische, oft anfallende Holzleisten 19a in Packmustern verbaut werden können. Andere Aufbaubereiche 260 können noch einen Aufbau ermöglichen, mit einer bestimmten Art von Schüttgut 19, insbesondere Leiste, weiter insbesondere Holzleiste 19a, die seltener (im Vorprozess) auftritt.

Es werden insbesondere die einzelnen Holzleisten 19a nach ihrer Dimensionierung (Länge, Breite, Höhe) auf einen Stapel (der Packeinheit 500 bzw. Prepackeinheit 505) sortiert, wobei die Sortierung identischer Teile auf jeweils einen Stapel erfolgen kann. Es können mehrere Stapel existieren, auf die jeweils eine Art von Teil des Schüttguts 19 sortiert werden kann. Dabei werden die verschiedenen Teile auf verschiedene Stapel sortiert, wobei bei Beginn des Aufbaus einem Aufbaubereich 260 eine Art Teil zugeordnet werden kann, um einen Aufbau mit dieser Art von Teil durchzuführen.

Es können also verschiedene Packmuster definiert und dann erzeugt werden, um eine fertiggestellte Packeinheit 500 aufzubauen. Das Packmuster kann sich insbesondere an Vorgaben eines Abnehmers und/oder eines Lieferdienstes orientieren, um die Packeinheit 500 versenden zu können.

Als letzten Schritt kann ein Umhüllen der Packeinheit 500 mit einer Verpackung, insbesondere mit einer Folie vorgesehen sein, um einen Transport zu ermöglichen, ohne dass die Packeinheit 500 durch ein Anheben oder Bewegen wieder auseinanderfallen würde.

Das Verfahren 100 weist insbesondere den Schritt eines Erfassens 110 auf. Das Erfassen 110 kann mittels mindestens einer Sensorvorrichtung 250 (siehe Fig. 4) erfolgen. Das Erfassen 110 bezieht sich dabei insbesondere auf das Erfassen 110 von Anordnung, Position, Überlapp 116, Berührung 112 von auf einer ersten Fördereinrichtung 210 geförderten Teilen eines Schüttguts 19, wie dies in der Fig. 2A gezeigt und diesbezüglich exemplarisch beschrieben ist.

Die in einem Sensorbereich 258 erfassten 110 Teile des Schüttguts 19 werden insbesondere in einem Schritt eines Übermittelns 120 einer Information 122 aus dem Erfassen 110 von auf der ersten Fördereinrichtung 210 geförderten Teilen des Schüttguts 19 einer Steuereinrichtung (siehe Steuereinrichtung 300 mit Computerprogrammprodukt 400 in Fig. 4) übermittelt 120. Die Information 122 kann dabei insbesondere eine als elektronisches Signal übertragene Bildinformation und/oder Verteilungskarte und/oder Tiefenprofilkarte und/oder Punktwolke des erfassten Sensorbereichs 258 zu einem gegebenen Zeitpunkt t sein, wie er in der Fig. 2A schematisch dargestellt ist. Dabei kann alles was die Sensoreinheit 250 passiert hat bereits als Information 122 übermittelt worden sein, um die Informationen 122 verschiedener Zeitpunkte zusammenzusetzen, um dadurch eine Vorhersage treffen zu können, welches Teil wann wo relativ zu welchem Setzroboter 270 angeordnet sein wird. Dabei kann die Position der Fördervorrichtung 210 über einen Encoder mit einem Rad nachverfolgt werden, um dadurch der Steuereinrichtung 300 eine Position eines Teils eines Schüttguts 19, insbesondere einer Holzleiste 19a, übermitteln zu können, um eine Vorhersage durch die Steuereinrichtung 300 zu ermöglichen, wann welches Teil wo relativ zu welchem Setzroboter 270 angeordnet sein wird.

In einem Schritt eines Ermittelns 130 der Vorhersage kann, basierend auf der Information 122 von der Sensorvorrichtung 300, vorhergesagt werden, welches einzelne Teil des Schüttguts 19 wann durch einen Setzroboter 270 zu nehmen und wo in einem Aufbaubereich 260 (siehe beides Fig. 4), insbesondere auf einer Präpackeinheit 505, abzusetzen ist, um im Aufbaubereich 260 eine Packeinheit 500 aufzubauen, wie sie exemplarisch in der Fig. 2B gezeigt und diesbezüglich beschrieben sind.

Dabei kann also im Beispiel des Holzschnittguts als Schüttgut 19, wie in der Fig. 1 bis 2B gezeigt und diesbezüglich beschrieben, vorgesehen sein, dass das Holzschnittgut - etwa die Holzleisten 19a - als Schüttgut 19 auf der ersten Fördervorrichtung 210 transportiert, sprich gefördert, wird, um dadurch einen Sensorbereich 258 passieren zu können, worin die entsprechende Anordnung und Verteilung von Schüttgut 19 erfasst wird. Diese insbesondere als Bildinformation erfassten Daten können dann als elektronisches Signal der Steuereinrichtung 300 zugeführt werden, die entsprechend die Vorhersage trifft, welche Teile des Schüttgut 19, also welche Holzschnitte bzw. Holzleisten 19a aufgenommen werden sollen, in einem nächsten Schritt und welche entsprechend auf vorhergesagte Positionen 520 abgesetzt werden sollen, um dadurch eine Prepackeinheit 505 aufbauen zu können, um zu einer Packeinheit 500 zu gelangen.

Basierend auf der Vorhersage 130 des, insbesondere vorangehenden, Schrittes 130 kann das Verfahren 100 einen Schritt eines Ansteuerns 140 eines Setzroboters 270 (siehe Fig. 4 bis 7B) aufweisen. Dabei kann mittels der Steuereinrichtung 300 mindestens ein Setzroboter 270 angesteuert werden, um eine Vorhersage 130 umsetzen zu können. Dabei kann mindestens ein einzelnes Teil des Schüttguts 19, also hier im Beispiel des Holzschnittes, von der ersten Fördervorrichtung 210 in den Aufbaubereich 260 übertragen werden und in dem Aufbaubereich 260 abgesetzt werden. Dabei kann, wie an anderer Stelle hierin beschrieben insbesondere ein einzelnes Teil auf eine Präpackeinheit 505 auf eine Position 520 gesetzt werden, um die Packeinheit 500 des Schüttguts 19 aufzubauen. Dabei kann auch ein Orientieren 102 und Setzen 101 des Teils des Schüttgutes 19 erfolgen, um eine Orientierung auf der Position zu erreichen, die der Vorhersage 130 entsprechen kann.

Fig. 4 zeigt eine exemplarische Ausführungsform einer Setzanlage 200 in Draufsicht. Die in der Fig. 4 gezeigte Ausführungsform der Setzanlage 200 entspricht dabei der Ausführungsform der Setzanlage 200, wie sie in den Fig. 4 bis 7B gezeigt ist, insbesondere aus verschiedenen Perspektiven und/oder mit verschiedenen Auslassungen von Komponenten der Setzanlage 200 zur besseren Darstellung für den Leser, um das Verständnis des Aufbaus besser verstehen zu können.

Die in der Fig. 4 dargestellte Ausführungsform der Setzanlage 200 ist dabei insbesondere aufgebaut, aufweisend eine erste Fördervorrichtung 210 und eine zweite Fördervorrichtung 220. Die erste Fördervorrichtung 210 ist insbesondere als geschlossene Bahn ausgebildet, um eine Redundanz des über eine Zuführvorrichtung 235 zugeführten Schüttgut 19 (hier nicht gezeigt) durch die Sensorbereiche 258 zu ermöglichen, um Informationen 122 (siehe Fig. 3) von einem Sensor 250 in einem Tor 255 zu erzeugen, um diese Informationen 122 einer Steuereinrichtung 300 mit Computerprogrammprodukt 400 zu führen zu können. Dadurch kann eine Vorhersage 130 (siehe Fig. 3) getroffen werden, wie an anderer Stelle hierin beschrieben, um ein Teil eines Schüttguts 19 auf einem Aufbaubereich 260 anordnen zu können und dadurch Packeinheiten 500 (siehe Fig. 2B) aufbauen zu können.

Dazu können Setzroboter 270 verwendet werden - hier exemplarisch zwölf Stück an der Zahl - welche als Deltaroboter ausgebildet sein können, um in einer Operationsebene 265 operieren zu können und entsprechend Teile des Schüttguts 19 in die Aufbaubereiche 260 von der ersten Fördervorrichtung 210 zu übertragen.

Es können Schaltschränke 230 ausgebildet sein, die es ermöglichen, die Steuereinrichtung 300 mit den Deltarobotern verbinden zu können, um das Ansteuern der Setzroboter 270 als Deltaroboter zu ermöglichen. Diese können auch für den Bediener geöffnet werden, wodurch ein geöffneter Schaltschrank 230a resultieren kann.

Die erste Fördervorrichtung 210 ist aber insbesondere symmetrisch in eine linke Hälfte L und rechte Hälfte R aufgeteilt, wodurch das Schüttgut 19 in einer geschlossenen Schleife um eine Mittellinie A-A, insbesondere eine Symmetrieebene in Bezug auf die erste Fördervorrichtung 210 aufspannend, rumlaufen kann. Dabei kann über eine Schüttvorrichtung 235 entsprechend das Schüttgut 19 auf die erste Fördervorrichtung 210 geschüttet werden, wodurch ein Umlauf des Schüttguts 19 über die erste Fördervorrichtung 210 erfolgen kann. Dabei kann die erste Fördervorrichtung 210 insbesondere in drei Bereiche eingeteilt werden, einen langen linearen Teil 216, einen kurzen, linearen Teil 214, die über insgesamt vier Kurven 212 miteinander verbunden sind, um die Schleife zu schließen. Die Deltaroboter sind in einer Linie des Überlapps zwischen den jeweils ersten Fördervorrichtungen 210 und zweiten Fördervorrichtungen 220 in entsprechenden Gestellen als Halterungen angeordnet.

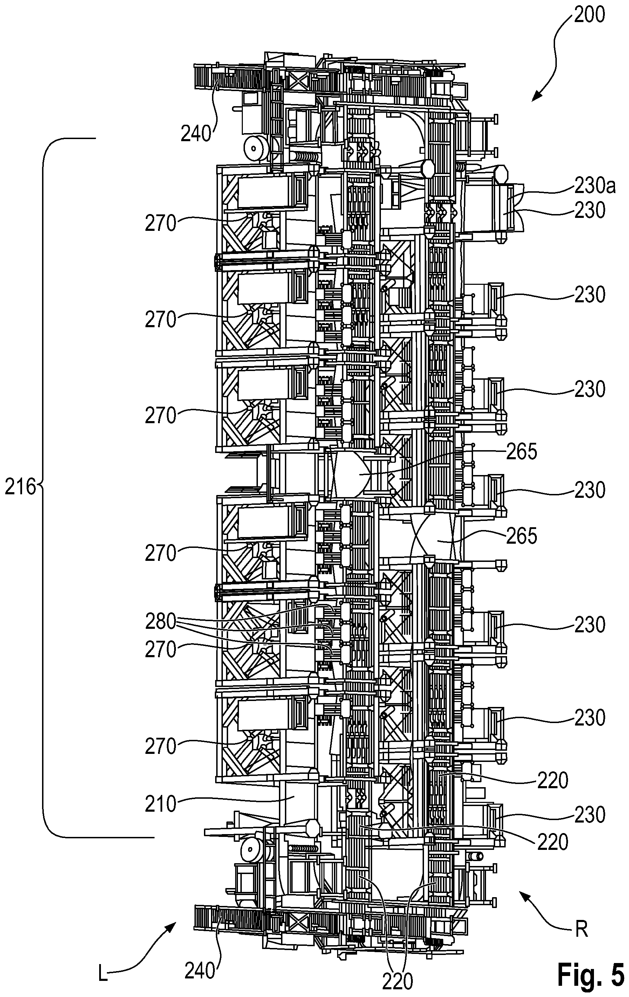

Die Aufbaubereiche 260 sind dabei insbesondere an einer Hebevorrichtung 280 angeordnet, wie dies in der Fig. 5 dargestellt ist. Dadurch ist es möglich, dass bei Aufbau der Packeinheiten 500 entsprechend ein Absenken der Prepackeinheiten 505 erfolgen kann, um zu ermöglichen, dass die Setzroboter 270 immer in ihrer Operationsebene 265 operieren können. Dadurch kann der Aufbau der Packeinheit 500 beschleunigt werden.

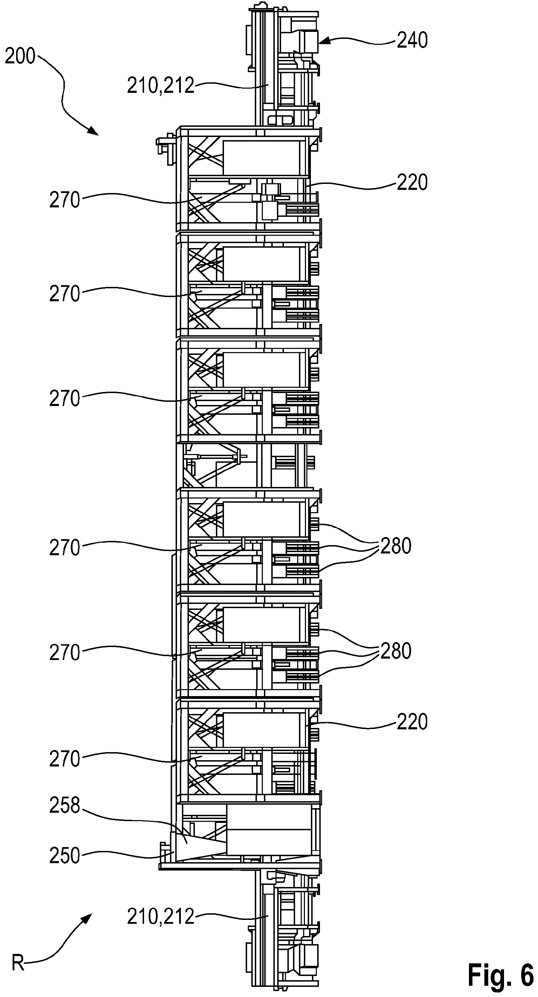

Wenn die Hebevorrichtung 280 die Höhenebene der zweiten Fördervorrichtung 220 erreicht, die insbesondere tiefer liegt als die der Fördervorrichtung 210, wie dies insbesondere in Bezug auf die Fig. 6 zu sehen ist, kann eine Fertigstellung der Packeinheit 500 indiziert sein. Sowohl die Hebevorrichtung 280 als auch die zweite Fördervorrichtung 220 weisen sogenannte Kettenförderer auf, die insbesondere derart ausgebildet sind, dass sich die Ketten der Hebevorrichtung 280 und die Ketten der zweiten Fördervorrichtung 220 ineinander lagern können, um damit einen Übergang zur Hebevorrichtung 280 zur zweiten Fördervorrichtung 220 zu ermöglichen. Insbesondere ist damit nicht mehr vorgesehen, dass ein weiteres Umheben der Packeinheit nach Fertigstellung erfolgen müsste.

Die erste Fördervorrichtung 210 ist aber insbesondere als ein Förderband ausgebildet, um ein Durchfallen oder Durchrutschen der Teile des Schüttguts 19 verhindern zu können. Das Schüttgut 19 kann dabei Tore 255 passieren in denen entsprechende Sensorvorrichtungen 250 angeordnet sein können, um dadurch entsprechend passierende Teile des Schüttgutes 19 erfassen zu können.

Die Sensorvorrichtung 250 kann dabei insbesondere als eine Kamera und/oder als ein LIDAR-Sensor ausgebildet sein, der eine Karte des passierenden ersten Förderbandes mit einem darauf geförderten Schüttguts 19 erstellen kann, um diese als elektronisches Signal als eine Information 122 (siehe Fig. 3) der Steuereinrichtung 300 zur Verfügung stellen zu können, um dadurch entsprechend eine Vorhersage 130 in der Steuereinrichtung 300 zu ermitteln, welche Position in welchem Aufbaubereich 260, insbesondere in welcher Präpackeinheit 505 mit welchem Teil des Schüttguts 19 beladen werden kann, um so die verschiedenen Packeinheiten 500 aufbauen zu können. Dabei kann insbesondere auch vorgesehen sein, dass die Steuereinrichtung 300 ausgebildeten und eingerichtet ist, zusammen mit einem Computerprogrammprodukt 400 ein Verfahren 100 durchzuführen, wie es an anderer Stelle hierin beschrieben ist. Dabei kann auch vorgesehen sein, dass die Steuereinrichtung entsprechend die durch den Sensorbereich 258 passierenden Teile des Schüttguts 19 verschiedenen Setzrobotern 270 zuweist, also insbesondere nicht immer dem nächsten, sondern entsprechend auch verteilt auf die, bei denen die Vorhersage 130 eine besonders effiziente Packung der Packeinheit 500, die aufgebaut werden soll vorhersagen lässt. In der gezeigten Ausführungsform sind beispielsweise jeweils ein Tor 255 mit Sensorvorrichtung 250 jeweils sechs Setzroboter zugeordnet.

An den jeweiligen Stirnseiten der Setzanlage 200, die insbesondere im Bereich der kurzen linearen Teile 214 eingeordnet sind, kann entsprechend eine Entnahme 240 ausgebildet sein, die es ermöglicht fertig gestellte Packeinheiten 500, die über die zweite Fördervorrichtung 220 zugeführt werden, aus der Setzanlage 200 zu entfernen.

Dabei kann eine Kontrollstation 246 der (automatisierten) optischen Nachkontrolle dienen, um ein Überstehen über die Außendimensionierung des Packgutes als Packeinheiten 500, wie sie vorgesehen ist, von Teilen des Setzgutes 19, verhindern zu können. Alternativ oder zusätzlich kann eine Waage 246 vorgesehen sein, um die Dichte ermitteln zu können, insbesondere in Verbindung mit der Kontrollstation 246, um dadurch zu ermöglichen, dass Packeinheiten 500 entsprechend auch die gewünschten Packungsdichten aufweisen können. Fig. 5 zeigt die exemplarische Ausführungsform der Setzanlage 200 in Unteransicht. Dabei sind durch die Schrägstellung der Ansicht die Hebevorrichtungen 280 zu sehen, die es ermöglichen, dass die Setzroboter 270 in einer Operationsebene 265 operieren können. Dabei kann auch vorgesehen sein, dass nicht alle Positionen mit Schaltschränken 230 versehen sein müssen, sondern manchen Setzroboter 270 können redundant operieren, also einem anderen Schaltschrank "Folge leisten". Ebenso kann eine Steuereinrichtung 300 lokal oder auch in der Cloud und auf einem Server betrieben werden. Die Information 122, die der Steuereinrichtung zugeführt werden kann, kann insbesondere über eine automatisierte Bilderkennung Merkmale extrahieren, um die Vorhersage 130 treffen zu können. Entsprechend kann auch durch die Steuereinrichtung eine Bildanalyse der optischen Nachkontrolle übernehmen.

Fig. 6 zeigt die exemplarische Ausführungsform der Setzanlage 200 in Seitenansicht. Dabei werden insbesondere die verschiedenen Ebenen, auf denen die erste Fördervorrichtung 210 und die zweite Fördervorrichtung 220 angeordnet sind, deutlich, wobei Hebevorrichtungen 280 für Aufbaubereiche 260 eine Höhenüberbrückung darstellen können, wobei im Laufe des Aufbaus entsprechend ein Absenken der Hebevorrichtung 280 stattfinden kann, um den Aufbaubereich 260 bei Abschluss des Aufbaus auf Höhe der zweiten Hebevorrichtung 220 bringen zu können, um ein Abtransport aus der Setzanlage 200 zu ermöglichen.

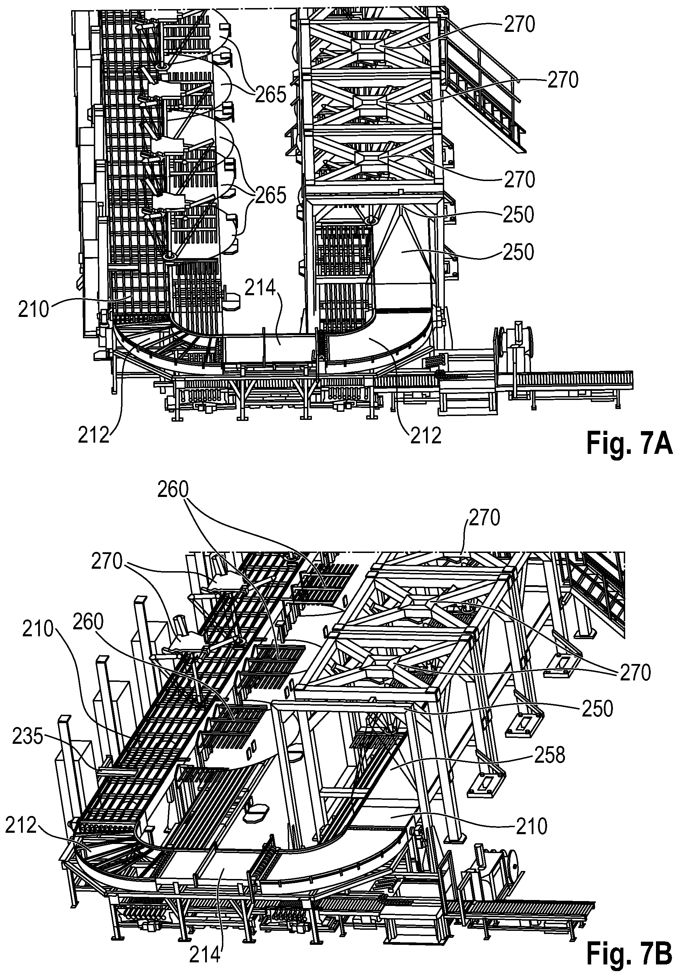

Fig. 7A und Fig. 7B zeigen zwei Teilansichten der exemplarischen Ausführungsform der Setzanlage 200, um die verschiedenen Höhenebenen der ersten Fördervorrichtung 210 und der zweiten Fördervorrichtung 220 darstellen zu können. Zusätzlich sind in Fig. 7A und 7B auf der linken Seite die Gestänge optisch entfernt - sie sind also tatsächlich noch vorhanden, aber aus Gründen der Anschaulichkeit ausgeblendet -, an denen die jeweiligen Deltaroboter als Setzroboter 270 angeordnet sind, um deren Position und Ausrichtung darstellen zu können. Dadurch sind auch die Aufbaubereiche 260, die ohne Packeinheiten 500 bzw. Präpackeinheiten 505 auf der gleichen Höhenebene angeordnet sind, wie die erste Fördervorrichtung 210, um ein Operieren der Setzroboter 270 in einer Operationsebene, der Ebene der ersten Fördervorrichtung 210, zu ermöglichen. Die Aufbaubereiche 260 sind insbesondere als höhenverstellbare Rechen ausgebildet, von denen jedem Setzroboter in der gezeigten Ausführungsform drei zugeordnet sind. Diesen können jeweils gleiche oder verschiedene Holzleisten 19a zugewiesen werden, um einen Aufbau einer Prepackeinheit 505 zu ermöglichen, insbesondere lagenweise. Die Rechen sind insbesondere derart ausgebildet und angeordnet, um durch eine zweite Fördervorrichtung 220 durchtauchen zu können, um dadurch einen Übertrag der fertigen Packeinheit 500 auf die zweite Fördervorrichtung 220 zu ermöglichen.

Auch ist aus Gründen der Anschaulichkeit bei der ersten Fördervorrichtung 210 auf der linken Seite das Förderband entfernt, um die das Förderband antreibenden Kettenstrukturen darstellen zu können.

Fig. 7B zeigt eine Teilansicht der exemplarischen Ausführungsform der Setzanlage, wobei auch der erste (in Blickrichtung) Setzroboter 270 ausgeblendet ist, um einen freien Blick auf die Ebenenstrukturen gewähren zu können. Hier ist insbesondere auch eine Schüttvorrichtung 235 erkennbar, die es ermöglicht, dass Schüttgut auf das Förderband der ersten Fördervorrichtung 210 geschüttet werden kann. Auch wird dabei der entsprechende Sensorbereich 258, der durch die Sensorvorrichtung 250, insbesondere als Kamera und/oder LIDAR ausgebildet, aufgespannt wird, deutlich, der für das Erfassen des Schüttguts 19 verantwortlich ist. Dabei können, wie im Vergleich mit der Fig. 4 klar wird, zwei Schüttvorrichtungen 235 vorgesehen sein. Dabei können beide Sensorvorrichtungen entsprechend Teile des Schüttgutes 19 erfassen, wie sich auch das "Lagebild" nach Passieren der jeweils anderen Schüttvorrichtung 265 ändern kann, wobei die Steuereinrichtung 300 die Teile des Schüttgutes 19 für den Aufbau von Packeinheiten 500 beider "Zweige" L, R - ein Zweig ist jeweils eine der beiden Arme auf der langen Gerade 216, mit diesem zugeordneten Setzrobotern - zuweisen kann, um die Setzroboter beider Zweige anzuweisen entsprechend zu agieren. Dabei kann eine entsprechend größere Anzahl von Zweigen vorgesehen sein, was insbesondere auch durch komplexer gewundene geschlossene erste Fördervorrichtungen 210 umgesetzt werden kann.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen. In den Figuren beziehen sich die Begriffe rechts und links insbesondere auf die Anordnung und Orientierung auf dem Blatt, auf dem sie dargestellt sind, entsprechend auch die Begriffe oben und unten. Dem gegenüber sind Begriffe wie auf der rechten Seite der Maschine und/oder der rechten Seite der Anordnung und/oder der rechten Seite der Anlage auf die jeweilige Maschine bezogen, die in den Figuren dargestellt ist. Entsprechend ist auch eine Höhe auf die Höhenebene bezogen relativ zu einer Bodenebene, auf der die Maschine angeordnet wäre.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichenliste

- 1,2,3,4: Charge
- 12: Baumstamm
- 15: Sägen
- 16: Horizontalsäge
- 17: Längenrichtung Baumstamm
- 18: Astloch / Zweigansatz
- 19: Schüttgut (als Schnittgut)
- 19a: Holzleisten
- 20: Herstellungssituation für Schüttgut (als Schnittgut)
- 22: Verwendung einer Sensorvorrichtung und einer ersten Fördervorrichtung

- 100: Verfahren
- 112: Berührsituation
- 116: Überlappsituation
- 110: Erfassen von Schnittgut
- 101: Setzen
- 102: Orientieren
- 120: Übermitteln einer Information
- 125: Förderrichtung
- 130: Vorhersagen einer Position
- 140: Ansteuern der Setzroboter

- 200: Setzanlage
- 210: erste Fördervorrichtung
- 212: Kurve
- 214: kurzer Linearbereich
- 216: langer Linearbereich
- 220: zweite Fördervorrichtung
- 235: Schüttvorrichtung
- 250: Sensorvorrichtung
- 258: Sensorbereich
- 260: Aufbaubereich
- 270: Setzroboter

- 300: Steuereinrichtung
- 400: Computerprogrammprodukt

- 500: Packeinheit
- 505: Prepackeinheit
- 510: Aussparung
- 520: Position
- 530: Aufbaugrundplatte

- l: Länge
- L: linker Zweig auf der linken Seite
- R: rechter Zweig auf der rechten Seite

- A-A: Linie

## Patentansprüche

1. Setzanlage (200) für ein Setzen (101) von setzbarem Schüttgut (19), insbesondere Leisten, weiter insbesondere Holzleisten, aufweisend:
- mindestens einen Setzroboter (270),
- mindestens eine Sensorvorrichtung (250),
- mindestens eine Steuereinrichtung (300), und
- mindestens eine erste Fördervorrichtung (210),
**dadurch gekennzeichnet, dass** die mindestens erste Fördervorrichtung (210) mindestens einem Aufbaubereich (260) für einen Aufbau einer Packeinheit (500) des Schüttguts (19) zugeordnet ist, um mittels des mindestens einen Setzroboters (270), mindestens ein einzelnes Teil des Schüttguts (19) von der ersten Fördervorrichtung (210) in den Aufbaubereich (260) zu übertragen und in dem Aufbaubereich (260) abzusetzen, insbesondere um das einzelne Teil des Schüttguts (19) auf eine Pre-Packeinheit (505) zu setzen, um eine Packeinheit (500) des Schüttguts (19) aufzubauen,
wobei die Sensorvorrichtung (250) ausgebildet und eingerichtet ist, um Schüttgut (19), das auf der ersten Fördervorrichtung (210) gefördert wird zu erfassen und eine Information (122) an die Steuereinrichtung (300) zu übermitteln,
wobei die Steuereinrichtung (300) ausgebildet und eingerichtet ist, um basierend auf der Information (122) von der Sensorvorrichtung (250) eine Vorhersage (130) zu ermitteln und darauf aufbauend den Setzroboter (270) anzusteuern, um festzulegen, welches einzelne Teil des Schüttguts wann zu nehmen und wo im Aufbaubereich (260), insbesondere auf der Pre-Packeinheit (505), abzusetzen ist, um im Aufbaubereich (260) die Packeinheit (500) aufzubauen.

2. Setzanlage (200) nach Anspruch 1, **dadurch gekennzeichnet, dass** mindestens eine zweite Fördervorrichtung (220) den Aufbaubereich (260) für den Aufbau der Packeinheit (500) aufweist, indem sie der mindestens ersten Fördervorrichtung (210) derart zugeordnet ist, um von der ersten, das Schüttgut (19) fördernden Fördervorrichtung (210) in den Aufbaubereich (260) auf der zweiten Fördervorrichtung (220), mittels des Setzroboters (270), mindestens ein einzelnes Teil des Schüttguts (19) zu übertragen, um eine Packeinheit (500) aufzubauen, insbesondere um sie auf eine Pre-Packeinheit (505) zu setzen (101).

3. Setzanlage (200) nach mindestens einem der Ansprüche 1 oder 2, **dadurch gekennzeichnet, dass** die erste Fördervorrichtung (210) eine geschlossene Bahn aufweist, ausgebildet und angeordnet, um darauf das setzbare, insbesondere orientierbare, Schüttgut (19), insbesondere in einem Karussellverfahren, umlaufen zu lassen.

4. Setzanlage (200) nach mindestens einem der voranstehenden Ansprüche, **dadurch gekennzeichnet, dass** die Steuereinrichtung (300) ausgebildet und eingerichtet ist, um die Position (520), auf der das einzelne Teil des Schüttguts (19) im Aufbaubereich (260) abzusetzen ist, anhand mindestens eines Parameters zu bestimmen.

5. Setzanlage (200) nach Anspruch 4, **dadurch gekennzeichnet, dass** der Parameter insbesondere eines ausgewählt aus einer Art des Teils des Schüttguts, einer Dimensionierung des Teil des Schüttguts, einer Durchführungsgeschwindigkeit eines Setzvorgangs, einer Reichweite des Setzroboters (270), einer Bewegungsmenge des Setzroboters (270), einem Energieverbrauch bei der Durchführung des Setzvorgangs, einer Vorhersage der Packungsdichte oder einer Vorhersage des Packungsaufbaus basierend auf den bereits abgelegten und/oder noch auf der ersten Fördervorrichtung (210), insbesondere im Umlauf, befindlichen einzelnen Teilen des Schüttguts (19) ist.

6. Setzanlage (200) nach mindestens einem der voranstehenden Ansprüche, **dadurch gekennzeichnet, dass** die Steuereinrichtung (300) und der Setzroboter (270) ausgebildet und eingerichtet sind, um ein setzbares und orientierbares Schüttgut (19) beim Übertrag von der ersten Fördervorrichtung (210) in den Aufbaubereich (260) zu Orientieren (102).

7. Setzanlage (200) nach mindestens einem der voranstehenden Ansprüche, **dadurch gekennzeichnet, dass** der mindestens eine Setzroboter (270) einer ausgewählt aus einem Deltaroboter, einem Sechsachsroboter, einem SCARA-Roboter oder einer dreiachsig verfahrbaren Robotereinrichtung ist.

8. Setzanlage (200) nach mindestens einem der voranstehenden Ansprüche, **dadurch gekennzeichnet, dass** die mindestens eine Sensorvorrichtung ausgebildet und eingerichtet ist, um sich berührende und/oder überlagernde Teile des Schüttguts (19) zu erfassen und die Erfassung (110) als Information (122) der Steuereinrichtung (300) zur Verfügung zu stellen, wobei die Steuereinrichtung (300) ausgebildet und eingerichtet ist, um mindestens eines ausgewählt aus einer Art, einer Form oder einer Dimension eines Teils des Schüttguts (19) zu definieren, um darauf aufbauend den mindestens einen Setzroboter (270) derart anzusteuern, um ein für den weiteren Aufbau der Packeinheit (500) passendes Teil aus einer Überlagerungssituation (116) oder einer Berührsituation (112) zu entnehmen.

9. Setzanlage (200) nach mindestens einem der voranstehenden Ansprüche, **dadurch gekennzeichnet, dass** eine Schüttvorrichtung (235) ausgebildet ist, die das Schüttgut (19) auf die erste Fördervorrichtung (210) schüttet.

10. Setzanlage (200) nach mindestens einem der voranstehenden Ansprüche, **dadurch gekennzeichnet, dass** die erste Fördervorrichtung (210) über eine Breite der Fördervorrichtung im Bereich (285) eines Erfassens (110) der geförderten Teile des Schüttguts (19) durch die mindestens eine Sensorvorrichtung (250) zwischen 50 und 500 Teilen (pro Minute, alternativ pro Stunde), insbesondere zwischen 100 und 400 Teilen (pro Minute, alternativ pro Stunde), weiter insbesondere zwischen 150 und 360 Teilen (pro Minute, alternativ pro Stunde), weiter insbesondere 240 Teilen (pro Minute, alternativ pro Stunde) fördert.

11. Setzanlage (200) nach mindestens einem der voranstehenden Ansprüche, **dadurch gekennzeichnet, dass** die Steuereinrichtung (300) ausgebildet und eingerichtet ist, um den Abschluss des Aufbaus der Packeinheit (500) zu bestimmen, um die zweite Fördervorrichtung (220) zu betätigen, um die fertiggestellte Packeinheit (500) aus der Setzanlage zu befördern.

12. Setzanlage (200) nach mindestens einem der voranstehenden Ansprüche, insbesondere nach Anspruch 11, **dadurch gekennzeichnet, dass** die Setzanlage (200) ausgebildet und eingerichtet ist, um mehrere Packeinheiten (500) zeitlich überlappend aufzubauen, wobei die Steuereinrichtung (300) ausgebildet und eingerichtet ist, um die Verteilung der Teile des Schüttgutes (19) über die mehreren Aufbaubereiche (260) derart zu organisieren, dass die Packeinheiten (500) staufrei aus der Setzanlage (200) befördert werden können, insbesondere über einen Förderweg, den sich mindestens zwei Packeinheiten (500) nach Fertigstellung von deren Aufbau teilen; oder wobei die Setzanlage (200) ausgebildet und eingerichtet ist, um mehrere Packeinheiten (500) zeitlich überlappend aufzubauen, wobei die Steuereinrichtung (300) ausgebildet und eingerichtet ist, um über eine Logik einen Abtransport fertiger Packeinheiten zu koordinieren, derart, um einen Stau im Förderweg zu vermeiden.

13. Verfahren (100) zum Setzen (101), und insbesondere Orientieren (102), von setzbarem, und insbesondere orientierbarem, Schüttgut (19) **gekennzeichnet durch** die Schritte:
- eines Erfassens (110), mittels mindestens einer Sensorvorrichtung (250), von auf einer ersten Fördervorrichtung (210) geförderten Teilen eines Schüttguts (19);
- eines Übermittelns (120) einer Information (122) aus dem Erfassen (110) von auf der ersten Fördervorrichtung (210) geförderten Teilen des Schüttguts (19) an eine Steuereinrichtung;
- eines Ermittelns (130) einer Vorhersage, basierend auf der Information (122) von der Sensorvorrichtung, welches einzelne Teil des Schüttguts (19) wann zu nehmen und wo in einem Aufbaubereich (260), insbesondere auf einer Pre-Packeinheit (505), abzusetzen ist, um im Aufbaubereich (260) eine Packeinheit (500) aufzubauen; und
- eines Ansteuerns (140) eines Setzroboters (270), mittels der Steuereinrichtung (300), um, mittels des mindestens einen Setzroboters (270), mindestens ein einzelnes Teil des Schüttguts (19) von der ersten Fördervorrichtung (110) in den Aufbaubereich (260) zu übertragen und in dem Aufbaubereich (260) abzusetzen, insbesondere um ein einzelnes Teil auf eine Pre-Packeinheit (505) zu setzen, um die Packeinheit (500) des Schüttguts (19) aufzubauen.

14. Steuereinrichtung (300) für eine Setzanlage (200) nach einem der Ansprüche 1 bis 12, ausgebildet und eingerichtet, um ein Verfahren (100) nach Anspruch 13 durchzuführen.

15. Computerprogrammprodukt (400), aufweisend maschinenlesbare Anweisungen, die, wenn sie auf einer Steuereinrichtung (300) nach Anspruch 14 ausgeführt werden, die Steuereinrichtung (300) derart anweisen tätig zu werden, dass ein Verfahren (100) nach Anspruch 13 in einer Setzanlage (200) nach einem der Ansprüche 1 bis 12 durchgeführt wird.
